# EUROPÄISCHE PATENTSCHRIFT

(11) **EP 4 232 398 B1**
(45) Veröffentlichungstag und Bekanntmachung des Hinweises auf die Patenterteilung: **16.04.2025**
(21) Anmeldenummer: 21798991.2
(22) Anmeldetag: 21.10.2021
(51) Int. Cl.: B67D 1/00, A47J 31/40, B67D 1/04, B67D 7/02, B65D 85/804

(54) **KARTUSCHENSYSTEM, GETRÄNKEZUBEREITUNGSMASCHINE UND VERFAHREN ZUR HERSTELLUNG EINES KARTUSCHENSYSTEMS**
CARTRIDGE SYSTEM, BEVERAGE PREPARATION MACHINE, AND PROCESS FOR MANUFACTURING A CARTRIDGE SYSTEM
SYSTÈME DE CARTOUCHE, MACHINE DE PRÉPARATION DE BOISSONS ET PROCÉDÉ DE PRODUCTION D'UN SYSTÈME DE CARTOUCHE

(30) Priorität: 22.10.2020 DE 102020213333; 22.10.2020 DE 102020213332; 04.12.2020 DE 102020215357; 04.12.2020 DE 102020215361; 11.03.2021 DE 102021202396; 11.03.2021 DE 102021202394; 11.03.2021 DE 102021202395
(43) Veröffentlichungstag der Anmeldung: 30.08.2023
(73) Patentinhaber: Freezio AG, 8580 Amriswil (CH)
(72) Erfinder: KRÜGER, Marc, 51467 Bergisch Gladbach (DE); EMPL, Günter, 51429 Bergisch Gladbach (DE)
(74) Vertreter: Kutzenberger Wolff & Partner
(86) Internationale Anmeldenummer: PCT/EP2021/079272
(87) Internationale Veröffentlichungsnummer: WO 2022/084477

(56) Entgegenhaltungen:
- EP-A1- 2 017 221
- WO-A1-2019/101997
- US-A1- 2002 130 140

## Beschreibung

### Stand der Technik

Die vorliegende Erfindung geht aus von einem Kartuschensystem zur Herstellung eines Getränks, wobei das Kartuschensystem in eine Getränkezubereitungsmaschine einsetzbar ist, eine Kartusche, die ein mit einer Getränkesubstanz gefülltes Reservoir umfasst, und eine mit der Kartusche verbundene Kartuschenaufnahme aufweist, wobei die Kartuschenaufnahme eine mit dem Reservoir in Fluidverbindung bringbare Mischkammer und eine in die Mischkammer mündende Fluidzuführung aufweist, wobei die Kartusche eine Kartuschenwandung aufweist.

Solche Systeme sind aus dem Stand der Technik beispielsweise aus den Druckschriften EP 2 017 221 A1, WO 2017 / 121 802 A1, WO 2017 / 121 801 A1, WO 2017 / 121 801 A1, WO 2017 / 121 799 A1, WO 2017 / 121 798 A1, WO 2017 / 121 797 A1, WO 2017 / 121 796 A1 und WO 2019 / 002 293 A1 bekannt und werden zur Herstellung von Getränken aus vorportionierten Kartuschen verwendet. Die Herstellung von Getränken mit solchen Systemen ist für den Anwender äußerst komfortabel, da er lediglich eine Kartusche einsetzen und einen Startknopf drücken muss. Die Getränkezubereitungsmaschine übernimmt dann vollautomatisiert die Erzeugung desselben, das heißt insbesondere, dass die Getränkesubstanz mit einer vorbestimmten Menge an Flüssigkeit, insbesondere kaltem und karbonisiertem Wasser vermischt wird und in ein Trinkgefäß geleitet wird. Auf diese Weise lassen sich insbesondere Mixgetränke für den Anwender deutlich einfacher, schneller und mit weniger Aufwand herstellen. Der Anwender kann dabei aus einer Vielzahl von verschiedenen Kartuschen auswählen, so dass er je nach Belieben unterschiedliche Getränke herstellen kann.

Es ist eine Herausforderung, die Getränkesubstanz, insbesondere auch vor der Verwendung des Kartuschensystems in der Getränkezubereitungsmaschine, sicher und stabil in der Kartusche aufzubewahren. Hierbei ist es wichtig, dass die Frische und Qualität der Getränkesubstanz erhalten bleibt. Gleichzeitig sollte eine zuverlässiger und reproduzierbarer Getränkeherstellungsprozess durch das Kartuschensystem ermöglicht werden.

### Offenbarung der Erfindung

Es ist daher eine Aufgabe der vorliegenden Erfindung, ein in eine Getränkezubereitungsmaschine einsetzbares Kartuschensystem zur Herstellung eines Getränks bereitzustellen, mit dem eine verbesserte Aufbewahrung der Getränkesubstanz und/oder eine hochwertiger Getränkezubereitung möglich ist.

Diese Aufgabe wird durch ein Kartuschensystem gemäß Anspruch 1 gelöst. Das erfindungsgemäße Kartuschensystem hat gegenüber dem Stand der Technik den Vorteil, dass eine vorteilhafte Dichtung bzw. Abdichtung zwischen der Kartusche und der Kartuschenaufnahme ausgebildet ist. In vorteilhafter Weise ist es möglich, dass der Übergang zwischen der Kartusche und der Kartuschenaufnahme mithilfe des Abdichtungsmittels derart abgedichtet ist, dass dort - insbesondere bei der Getränkezubereitung - kein ungewollter Flüssigkeitsaustritt stattfindet, selbst wenn eine schnelle Getränkezubereitung unter Verwendung eines vergleichsweise hohen Drucks erfolgt. Es kann hierdurch vorteilhafterweise ein ungewollter Austritt von Flüssigkeiten und/oder von Getränkesubstanz aus einer Mischkammer der Kartuschenaufnahme während der Getränkezubereitung unterbunden werden. Hierdurch ist es möglich, die Bezugszeit zu verringern, ohne dass eine Geschmacksbeeinträchtigung beim herzustellenden Getränk droht. Das Abdichtungsmittel dient zusätzlich oder alternativ zu seiner Funktion als Abdichtung in vorteilhafter Weise dem Ausgleich von Fertigungstoleranzen der Kartusche, des Dichtelements und/oder der Kartuschenaufnahme. Für das Abdichtungsmittel kommen unterschiedliche geeignete Materialien, beispielsweise verschiedene Kautschuk-Arten und/oder Kunststoffe oder weitere Materialien infrage.

Es ist erfindungsgemäß insbesondere denkbar, dass das Abdichtungsmittel teilweise oder vollständig zwischen einer von der Kartusche abgewandten Oberseite des Dichtelements und der Kartuschenaufnahme angeordnet ist, sodass das Abdichtungsmittel den Übergang zwischen der Kartuschenaufnahme und der Kartusche, insbesondere im Bereich ihres Dichtelements, abdichtet. Es ist alternativ oder zusätzlich denkbar, dass das Abdichtungsmittel im Bereich des Verbindungsmittels der Kartusche zwischen der Kartusche und der Kartuschenaufnahme, insbesondere zwischen dem Dichtelement der Kartusche und der Kartuschenaufnahme, angeordnet und/oder ausgebildet ist.

Die Kartusche kann einen aus Glas gefertigten Hauptkörper aufweisen.

Es ist denkbar, dass die gesamte Kartusche aus Glas gefertigt ist und besonders bevorzugt als Glaskartusche und/oder Glasflasche ausgebildet ist.

Es ist alternativ denkbar, die Kartusche vollständig oder teilweise aus Kunststoff zu fertigen. Es ist alternativ denkbar, dass die Kartusche einen aus Aluminium gefertigten Hauptkörper aufweist, der in seinem typischen Wandungsbereich vorzugsweise eine Wandstärke zwischen 0,01 und 0,5 Millimeter, bevorzugt zwischen 0,01 und 0,2 Millimeter, besonders bevorzugt zwischen 0,03 und 0,1 Millimeter und ganz besonders bevorzugt von im Wesentlichen 0,05 Millimeter, insbesondere mit einer Fehlertoleranz von maximal 15%. Ein aus Aluminium gefertigter Hauptkörper ist beispielsweise durch Tiefziehen oder Fließpressen herstellbar.

Vorteilhafte Ausgestaltungen und Weiterbildungen der Erfindung sind den Unteransprüchen sowie der Beschreibung unter Bezugnahme auf die Zeichnungen entnehmbar.

Erfindungsgemäss ist vorgesehen, dass das Abdichtungsmittel als Teil des Dichtelements ausgebildet ist und/oder dass das Abdichtungsmittel ein von dem Dichtelement separates Element ist, das insbesondere zwischen der Kartusche und der Kartuschenaufnahme angeordnet ist. Das Abdichtungsmittel kann somit einstückig mit dem Dichtelement oder als von dem Dichtelement separates Bauteil ausgebildet sein.

Gemäß einer bevorzugten Ausführungsform der vorliegenden Erfindung ist vorgesehen, dass das Abdichtungsmittel einen Dichtring, ein vollflächiges Abdichtungsmittel mit einer Bohrung, und/oder einen Schaum aufweist. Es ist insbesondere denkbar, dass das Abdichtungsmittel als O-Ring ausgebildet ist, der insbesondere teilweise oder vollständig zwischen dem Dichtelement und der Kartuschenaufnahme angeordnet ist. Es ist alternativ denkbar, dass das Abdichtungsmittel vollflächig mit einer Bohrung/Aussparung für den Aufstechdorn ausgebildet ist. Alternativ ist es denkbar, dass das Abdichtungsmittel als Teil des Dichtelements und/oder verbunden mit dem Dichtelement, insbesondere an einer von der Kartusche abgewandten Oberseite des Dichtelements, ausgebildet ist. Es ist insbesondere denkbar, dass das Abdichtungsmittel einen Schaum (bzw. geschäumten Bereich) des Dichtelements umfasst, der an der Oberseite des Dichtelements, insbesondere in einem peripheren Außenbereich des Dichtelements, angeordnet ist. Es ist alternativ oder zusätzlich denkbar, dass das Abdichtungsmittel, beispielsweise ein O-Ring und/oder Schaum, im Bereich des Verbindungsmittels der Kartusche zwischen der Kartusche und der Kartuschenaufnahme, insbesondere zwischen dem Dichtelement der Kartusche und der Kartuschenaufnahme, angeordnet und/oder ausgebildet ist. Alternativ oder zusätzlich kann die zusätzliche Abdichtung zwischen der Kartusche und der Kartuschenaufnahme beispielsweise durch eine Ausführung der Kartuschenaufnahme mithilfe eines Zweikomponenten-Kunststoffs erfolgen.

Gemäß einer bevorzugten Ausführungsform der vorliegenden Erfindung ist vorgesehen, dass das Dichtelement an der Kartuschenwandung anbringbar ist, wobei die Kartuschenwandung insbesondere keinen Flansch zur Anbringung des Dichtelements umfasst. Es ist hierbei denkbar, dass das Dichtelement (insbesondere ohne, dass hierfür ein Flansch an der Kartusche vorhanden sein muss) an der Kartusche befestigt ist, insbesondere geklebt, gesiegelt, geschweißt und/oder gecrimpt. Das Dichtelement dichtet dabei das mit der Getränkesubstanz gefüllte Reservoir der Kartusche im Ausgangszustand des Kartuschensystems ab. Vorzugsweise sorgt das Dichtelement dafür, dass die Getränkesubstanz vor dem Start des Getränkeherstellungsprozesses innerhalb des Reservoirs verbleibt und dort für eine lange Haltbarkeit und ein gleichbleibendes Aroma hermetisch abgedichtet ist. Es ist insbesondere denkbar, dass das Dichtelement in einem Mündungsbereich der Kartusche an der Kartuschenwandung befestigt ist, vorzugsweise ohne, dass die Kartusche hierfür einen speziellen Flansch aufweist.

Gemäß einer bevorzugten Ausführungsform der vorliegenden Erfindung ist es alternativ vorgesehen, dass die Kartuschenwandung einen Flansch zur Anbringung des Dichtelements umfasst. Hierdurch ist es denkbar, dass eine vorteilhafte Anbringung eines Dichtelements zur Abdichtung des Reservoirs bzw. eines Hauptkörpers der Kartusche ermöglicht wird. Vorzugsweise sorgt das Dichtelement dafür, dass die Getränkesubstanz vor dem Start des Getränkeherstellungsprozesses innerhalb des Reservoirs verbleibt und dort für eine lange Haltbarkeit und ein gleichbleibendes Aroma hermetisch abgedichtet ist. Mithilfe des Flansches kann das Dichtelement mit hoher Stabilität und Dichtigkeit an der Kartusche angebracht werden, sodass mithilfe des Flansches und des Dichtelements auch hohe Innendrücke in der Kartusche eingeschlossen werden können. Die insbesondere flüssige Getränkesubstanz kann somit unter einem höheren Druck im Reservoir eingeschlossen sein. Es ist somit möglich, Getränkesubstanzen mit einem höheren Kohlensäuregehalt im Reservoir vorzuhalten, ohne dass die Gefahr besteht, dass die Abdichtung des Reservoirs, also insbesondere das Dichtelement, beispielsweise bei Erschütterungen während des Transports oder der Lagerung des Kartuschensystems aufgrund der Kohlensäure undicht wird und Gas und/oder Flüssigkeit austritt. Der höhere Kohlensäuregehalt wirkt sich wiederum positiv sowohl auf den Geschmack des herzustellenden Getränks als auch auf das Mindesthaltbarkeitsdatum der Kartusche aus. Einige Getränkesubstanzen benötigen zum Erhalt Ihrer Frische und Qualität dabei besonders hohe Innendrücke im Reservoir der Kartusche, die beispielsweise über eine Vorkarbonisierung bereitgestellt werden. Es ist ferner ein Vorteil, dass das Reservoir während des Getränkeherstellungsprozesses mit einem vergleichsweise hohen Druck ausgeleert werden kann, ohne dass unerwünschte Undichtigkeiten, beispielweise im Befestigungsbereich des Dichtelements an der Kartusche entstehen. Hierdurch kann die Bezugszeit verringert werden, ohne dass hierbei eine Geschmacksbeeinträchtigung beim herzustellenden Getränk droht. Gleichzeitig ist es vorteilhafterweise möglich, dass der Flansch keinen nachteiligen Einfluss auf die Zubereitungsgeschwindigkeit des Getränks in der Getränkezubereitungsmaschine hat.

Es ist denkbar, dass ein Dichtelement besonders vorteilhaft um den Flansch gecrimpt werden kann, wodurch sich eine besonders druckstabile Abdichtung ergibt. Dies ist besonders vorteilhaft für Getränkesubstanzen, die mit einem hohen Innendruck in dem Reservoir eingeschlossen werden. Es ist ferner vorteilhafterweise möglich, dass durch den Flansch ein vergrößerter Bereich zur Anbringung eines Dichtelements ausgebildet ist. Dies ist beispielsweise für die Anbringung eines als Dichtfolie ausgebildeten Dichtelements von Vorteil.

Gemäß einer bevorzugten Ausführungsform der vorliegenden Erfindung ist vorgesehen, dass die Kartusche einen insbesondere napfförmig ausgebildeten Hauptkörper umfasst, wobei der Hauptkörper mithilfe der Kartuschenwandung, die auf einer Seite durch einen Kartuschenboden verschlossen ist, ausgebildet ist, wobei der Hauptkörper insbesondere das Reservoir umfasst. Die Kartuschenwandung und der Kartuschenboden sind insbesondere einstückig ausgebildet. Es ist bevorzugt denkbar, dass die Kartuschenwandung zumindest in einem Hauptbereich der Kartuschenwandung zylinderförmig ausgebildet ist. Die Kartuschenwandung und der Kartuschenboden können bevorzugt durch eine Glasflasche gebildet sein. Alternativ ist es denkbar, dass die Kartuschenwandung und der Kartuschenboden durch einen Kunststoff oder ein Metall ausgebildet sind.

Gemäß einer bevorzugten Ausführungsform der vorliegenden Erfindung ist vorgesehen, dass die Kartuschenwandung einen Nebenbereich umfasst, der angrenzend an den Flansch in Richtung des Kartuschenbodens angeordnet ist, wobei die Kartuschenwandung in dem Nebenbereich eine geringere Wandstärke aufweist als im Bereich des Flansches. Der Flansch steht somit vorzugsweise in radiale Richtung nach außen über den Nebenbereich vor und bildet einen verbreiterten Mündungsbereich der Kartusche. Hierdurch ist eine vorteilhafte Anbringung des Dichtelements möglich. Insbesondere kann eine besonders stabile Verbindung durch Crimpen des Dichtelements um den Flansch erfolgen.

Gemäß einer bevorzugten Ausführungsform der vorliegenden Erfindung ist vorgesehen, dass die Kartuschenwandung ein insbesondere umlaufendes Verbindungsmittel zur Verbindung der Kartusche mit der Kartuschenaufnahme aufweist, wobei das Verbindungsmittel insbesondere eine oder mehrere Rastsicken, und/oder einen oder mehrere Rastwulste, und/oder einen oder mehrere Hinterschnitte, und/oder ein Außengewinde umfasst. Vorzugsweise wird somit eine stabile und kostengünstig herstellbare Verbindung zwischen der Kartusche und der Kartuschenaufnahme erzielt. Der Flansch zur Anbringung des Dichtelements ist insbesondere ein separat vom Verbindungsmittel ausgebildetes zusätzliches Element, das besonders vorteilhaft nicht Teil des Verbindungsmittels ist. Es ist erfindungsgemäß alternativ denkbar, dass die Kartusche keinen derartigen Flansch aufweist. Es ist besonders vorteilhaft möglich, dass das Verbindungsmittel, insbesondere das Rastmittel, einen abgeflachten Bereich umfasst, mithilfe dessen eine Verdrehsicherung der Kartusche und der Kartuschenaufnahme ausgebildet ist. Für den Fall, dass die Kartusche einen Flansch aufweist und für den Fall, dass der Flansch ein von dem Verbindungsmittel separater Bereich ist, ist trotz einer solchen Abflachung des Verbindungsmittels dennoch vorteilhafterweise die Verwendung einer kreisrunden Crimpkappe als Dichtelement möglich, die um den insbesondere kreisrunden Flansch gecrimpt wird. Für den Fall, dass die Kartusche keinen Flansch zur Anbringung des Dichtelements aufweist, ist trotz einer solchen Abflachung des Verbindungsmittels dennoch vorteilhafterweise die Verwendung einer kreisrunden Crimpkappe als Dichtelement möglich, die um den insbesondere kreisrunden Mündungsbereich der Kartuschenwandung gecrimpt wird. Es ist denkbar, dass die Kartusche über ihre gesamte Höhe eine Abflachung aufweist oder dass sie zylindrisch (bzw. mit kreisrunder Grundfläche über ihre gesamte Höhe) ausgebildet ist. Es ist alternativ denkbar, dass die Kartusche die Abflachung nur über einen Teil ihrer Höhe aufweist, beispielsweise nur im Bereich des Hauptkörpers der Kartusche, wobei ein Mündungsbereich der Kartusche, insbesondere um die mit dem Dichtelement verschlossene Öffnung der Kartusche, kreisrund ausgebildet ist. Auch eine Kombination ist denkbar. Es ist beispielsweise denkbar, dass ein Teilbereich der Kartusche zylindrisch ausgebildet ist und ein weiterer Teilbereich mit einer Abflachung ausgebildet ist. Es ist denkbar, dass das Verbindungsmittel eine Abflachung aufweist und dass die restliche Kartusche teilweise oder vollständig zylindrisch oder ebenfalls teilweise oder vollständig abgeflacht ist.

Gemäß einer bevorzugten Ausführungsform der vorliegenden Erfindung ist vorgesehen, dass die Kartusche das Dichtelement aufweist, wobei insbesondere der Hauptkörper in einem Ausgangszustand des Kartuschensystems auf seiner dem Kartuschenboden gegenüberliegenden Seite von dem Dichtelement verschlossen ist. In vorteilhafter Weise sorgt das Dichtelement dafür, dass die Getränkesubstanz vor dem Start des Getränkeherstellungsprozesses innerhalb des Reservoirs verbleibt und dort für eine lange Haltbarkeit und ein gleichbleibendes Aroma hermetisch abgedichtet ist.

Gemäß einer lediglich der Erläuterung dienenden Ausführungsform ist vorgesehen, dass das Dichtelement mithilfe des Flansches an die Kartusche gecrimpt, geklebt, gesiegelt, geschweißt und/oder geschraubt ist. Das Dichtelement ist insbesondere mithilfe eines peripheren Befestigungsbereichs des Dichtelements und mithilfe des Flansches an die Kartusche gecrimpt, geklebt, gesiegelt und/oder geschweißt. Durch Crimpen des Dichtelements um den Flansch kann dabei eine besonders druckstabile Befestigung des Dichtelements an der Kartusche erfolgen, sodass vergleichsweise hohe Innendrücke sicher im Innenraum der Kartusche auch über lange Zeiten eingeschlossen werden können. Durch ein am Flansch gecrimptes Dichtelement ergeben sich somit besondere Vorteile. Es ist jedoch auch denkbar, dass andere Verbindungsverfahren als das Crimpen zur Anbringung eines Dichtelements an der Kartusche unter Zuhilfenahme des Flansches verwendet werden. So kann das Dichtelement beispielsweise an den Flansch geklebt oder gesiegelt oder geschweißt werden. Hierdurch ergibt sich eine besonders vorteilhafte Flexibilität bei der Verwendung der Kartusche. Insbesondere ist es denkbar, dass eine Kartusche mit unterschiedlichen Dichtelementen (und/oder Anbringungsverfahren für die Dichtelemente an der Kartusche) kombinierbar ist, ohne dass eine bauliche Änderung der Kartusche nötig wird. Dies erhöht die Einsatzmöglichkeiten der Kartusche bzw. des Kartuschensystems sowie die Skalierbarkeit auf besonders kosteneffiziente Weise.

Gemäß einer lediglich der Erläuterung dienenden Ausführungsform ist vorgesehen, dass das Dichtelement eine Crimpkappe umfasst.

Gemäß einer lediglich der Erläuterung dienenden Ausführungsform ist vorgesehen, dass die Crimpkappe an dem Flansch der Kartusche befestigt ist, insbesondere in einem Ausgangszustand des Kartuschensystems, wobei die Crimpkappe insbesondere an dem Flansch der Kartusche gecrimpt ist. Hierbei ist ein Befestigungsbereich der Crimpkappe vorzugsweise um den Flansch gecrimpt. Mithilfe des Flansches kann somit eine besonders vorteilhafte Crimpverbindung ausgebildet werden. Eine Crimpverbindung ist besonders vorteilhaft, wenn in dem Reservoir der Kartusche ein Überdruck, insbesondere durch eine Vorkarbonisierung der Getränkesubstanz, ausgebildet ist. Beispielsweise ist es denkbar, dass ein Überdruck von mehreren bar, beispielsweise bis zu zwölf bar, bis zu elf bar oder bis zu fünf bar, in der Kartusche ausgebildet ist. Der durch das Dichtelement ausgebildete Verschluss des Hauptkörpers der Kartusche muss einem solchen Überdruck sicher standhalten. Hierfür ist ein Crimpen des Dichtelements um den Flansch der Kartusche besonders vorteilhaft, da eine solche Verbindung auch einen derart hohen Überdruck innerhalb des Hauptkörpers der Kartusche sicher und vergleichsweise langfristig einschließen kann. Ein Überdruck durch eine Vorkarbonisierung kann zur Konservierung und zum Frischhalten unterschiedlicher Getränkesubstanzen in der Kartusche verwendet werden. Ferner kann eine Vorkarbonisierung der Getränkesubstanz und ein Einschluss der Getränkesubstanz innerhalb der Kartusche mit einem entsprechenden Überdruck vorteilhaft für den Geschmack des aus der Getränkesubstanz erzeugten Getränks sein. Es ist, insbesondere alternativ zur Ausbildung des Dichtelements mithilfe einer Crimpkappe, möglich, dass das Dichtelement mithilfe oder durch eine Schraubkappe ausgebildet ist, wobei die Schraubkappe vorzugsweise eine Dichtung sowie eine Bohrung und/oder Stanzung für den Aufstechdorn aufweist. Der Mündungsbereich der Kartusche weist zum Aufschrauben der Schraubkappe vorzugsweise ein Gewinde auf. Es ist denkbar, dass die Schraubkappe auf die Kartusche aufgeschraubt wird, wobei die Kartuschenaufnahme vorzugsweise nach dem Aufschrauben der Schraubkappe an der Kartusche und/oder der Schraubkappe befestigt wird. Die Schraubkappe kann beispielsweise Kunststoff und/oder Metall aufweisen.

Gemäß einer bevorzugten Ausführungsform der vorliegenden Erfindung ist vorgesehen, dass das Dichtelement eine Dichtfolie umfasst. Es ist möglich, dass das Dichtelement vollständig als Dichtfolie ausgebildet ist oder dass lediglich ein Teil des Dichtelements als Dichtfolie ausgebildet ist. Beispielsweise wäre es denkbar, dass ein Teil eines als Crimpkappe ausgebildeten Dichtelements eine Dichtfolie umfasst.

Gemäß einer bevorzugten Ausführungsform der vorliegenden Erfindung ist vorgesehen, dass die Dichtfolie eine Kunststofffolie, eine Aluminiumfolie oder eine Mehrschichtfolie aus Kunststoff und/oder Aluminium, umfasst. Alternativ oder zusätzlich ist es denkbar, dass die Dichtfolie einen Schaum, ein Papier und/oder andere Materialien umfasst. Auch eine Kombination von Kunststoff, und/oder Aluminium, und/oder Papier, und/oder Schaum, und/oder weiteren Materialien ist denkbar.

Gemäß einer bevorzugten Ausführungsform der vorliegenden Erfindung ist vorgesehen, dass die Dichtfolie an dem Flansch der Kartusche befestigt ist, insbesondere in einem Ausgangszustand des Kartuschensystems, wobei die Dichtfolie an dem Flansch der Kartusche vorzugsweise geklebt, gesiegelt und/oder geschweißt ist. Vorzugsweise ist die Dichtfolie im an der Kartusche angebrachten Zustand dabei zumindest im Wesentlichen flach ausgebildet. Die Dichtfolie ist insbesondere mit der Oberseite des Flansches (die von der Kartusche abgewandt ist) und somit insbesondere mit der Stirnfläche des Flansches verbunden. Vorzugsweise ist dafür ein umlaufender peripherer Befestigungsbereich des Dichtelements an den Flansch der Kartuschenwandung geklebt, gesiegelt und/oder geschweißt. Es ist vorteilhafterweise denkbar, dass die Dichtfolie mithilfe von induktivem Schweißen an dem Flansch befestigt ist. Es ist alternativ oder zusätzlich denkbar, dass die Dichtfolie mithilfe von konduktivem Schweißen an dem Flansch befestigt ist. In Varianten, in denen die Dichtfolie unmittelbar mit dem Flansch verbunden ist, weist das Dichtelement vorzugsweise keinen zusätzlichen Dichtkörper auf, sondern die Öffnung des Hauptkörpers der Kartusche wird direkt und insbesondere ausschließlich durch die Dichtfolie hermetisch verschlossen.

Gemäß einer bevorzugten Ausführungsform der vorliegenden Erfindung ist vorgesehen, dass die Kartuschenaufnahme eine Grundstruktur aufweist, welche zumindest teilweise und insbesondere vollständig aus Kunststoff gefertigt ist. Hierdurch wird vorteilhafterweise eine kostengünstige Herstellung erzielt.

Gemäß einer bevorzugten Ausführungsform der vorliegenden Erfindung ist vorgesehen, dass die Grundstruktur eine napfförmige Ausgestaltung aufweist, deren offene Seite in Richtung der Kartusche ausgerichtet ist, wobei an einer der Kartusche gegenüberliegenden Bodenseite eine Getränkeauslassöffnung und eine nach außen offene Dornführung ausgebildet sind und wobei an der Bodenseite oder einer Seitenwandung der Grundstruktur eine Fluidzuführung ausgebildet ist. Diese Kartuschenaufnahme hat den Vorteil, dass die Fluidzuführung nicht in das Reservoir der Kartusche, sondern in die vom Reservoir separierte Mischkammer mündet. Hierdurch wird verhindert, dass durch die Fluidzuführung während des Getränkeherstellungsprozesses eine Rückkontamination der Getränkezubereitungsmaschine erfolgt. Hierfür wird das Reservoir nicht von dem Fluid durchspült, sondern die Getränkesubstanz und das Fluid gelangen vielmehr getrennt voneinander in die Mischkammer der Kartuschenaufnahme. Das Fluid wird direkt in die Mischkammer geleitet, während die Getränkesubstanz unabhängig vom Fluid in die Mischkammer überführt wird. Insbesondere ist zu diesem Zweck innerhalb der Dornführung ein verschiebbar gelagerter Aufstechdorn angeordnet, wobei der Aufstechdorn zwischen einer eingefahrenen Position, in welcher der Aufstechdorn von dem Dichtelement und insbesondere der Dichtfolie (oder dem Teilbereich) beabstandet ist, und einer ausgefahrenen Position, in welcher der Aufstechdorn das Dichtelement und insbesondere die Dichtfolie durchsticht (oder den Teilbereich vom Dichtelement teilweise oder vollständig abreißt) und bis in das Reservoir ragt, verschiebbar ist. Der Aufstechdorn ist im Ausgangszustand des Kartuschensystems also in der eingefahrenen Position, so dass das Reservoir durch das Dichtelement und insbesondere die Dichtfolie hermetisch abgedichtet ist, und kann zum Öffnen des Dichtelements der Kartusche von der eingefahrenen Position in die ausgefahrene Position überführt werden. In der ausgefahrenen Position wird das Dichtelement von dem Aufstechdorn perforiert oder eine Vorstanzung aufgerissen, so dass die Getränkesubstanz durch insbesondere wenigstens einen Seitenkanal am Aufstechdorn an dem Dichtelement vorbei in die Mischkammer gelangt. Es wird somit eine einfache und zuverlässige Öffnung einer zuvor aromadicht verschlossenen Kartusche in einer Getränkezubereitungsmaschine ermöglicht. Zudem hat sich gezeigt, dass eine Rückkontamination der Getränkezubereitungsmaschine unterbunden wird, insbesondere da im Reservoir kein direkt auf die Fluidzuführung wirkender Überdruck erzeugt wird. Die Ausbildung der Mischkammer in der Kartuschenaufnahme, die in die Getränkezubereitungsmaschine reversibel einsetzbar ist, sorgt vorteilhafterweise dafür, dass die Mischkammer Teil des austauschbaren Kartuschensystem ist. Auf diese Weise wird eine Verunreinigung der Getränkezubereitungsmaschine durch die Getränkesubstanz wirksam vermieden, weil lediglich Teile des austauschbaren Einweg- oder Mehrwegkartuschensystems mit der Getränkesubstanz in Kontakt gelangen.

Gemäß einer bevorzugten Ausführungsform der vorliegenden Erfindung ist vorgesehen, dass die Außenwandung des Aufstechdorns wenigstens einen Seitenkanal zum Leiten der Getränkesubstanz in Richtung der Mischkammer, wenn das Dichtelement durchstochen ist, aufweist.

Gemäß einer bevorzugten Ausführungsform der vorliegenden Erfindung ist vorgesehen, dass der Aufstechdorn eine integrierte Druckluftleitung, welche die Kartuschenentladeeinrichtung ist, aufweist, wobei sich die Druckluftleitung entlang des Aufstechdorns insbesondere von einem ersten Ende des Aufstechdorns bis zu einem zweiten Ende des Aufstechdorns erstreckt. In vorteilhafter Weise sind somit drei Funktionen in den Aufstechdorn integriert: 1. Der Aufstechdorn umfasst den Aufstechteil, um das Dichtelement zu perforieren und somit die Kartusche zu öffnen 2. Der Aufstechdorn umfasst die Seitenkanäle, um ein Überführen der Getränkesubstanz in die Mischkammer zu ermöglichen 3. Der Aufstechdorn umfasst die integrierte Druckluftleitung, um Druckluft in das Reservoir zu blasen, wodurch die Getränkesubstanz unter Druck in die Mischkammer gedrückt wird.

Vorzugsweise ist am zweiten Ende ein Druckluftanschluss zum Anschluss an eine Druckluftquelle und am ersten Ende ein Druckluftauslass zum Einblasen von Druckluft in das Reservoir ausgebildet. Die in die Kartuschenaufnahme integrierte Kartuschenentladeeinrichtung umfasst im Sinne der vorliegenden Erfindung also zunächst nur eine Druckluftleitung, durch welche Druckluft von außen in das Reservoir eingeleitet werden kann. Die Kartuschenaufnahme ist derart ausgebildet, dass durch die Druckluft die Getränkesubstanz aus dem Reservoir in die Mischkammer gedrückt wird. Die Druckluft wird insbesondere von der Getränkezubereitungsmaschine bereitgestellt. Denkbar ist, dass eine Druckluftquelle direkt an den Druckluftanschluss angekoppelt wird, sobald das Kartuschensystem in die Getränkezubereitungsmaschine eingesetzt wird. Dies hat den Vorteil, dass eine Rückkontamination in Richtung der Getränkezubereitungsmaschine wirksam vermieden wird, weil die Kartuschenentladeeinrichtung insbesondere sofort beim Einsetzen des Kartuschensystems unter Druck steht und somit verhindert wird, dass Getränkesubstanz in Richtung der Druckluftleitung und insbesondere in Richtung der Druckluftquelle der Getränkezubereitungsmaschine wandert. Die Getränkesubstanz kann sich ausgehend vom Reservoir somit lediglich in Richtung der Mischkammer bewegen.

Der Druckluftanschluss ist insbesondere als Öffnung im Basisteil ausgebildet, wobei der Basisteil derart in der Kartuschenaufnahme angeordnet ist, dass der Druckluftanschluss von außerhalb der Kartuschenaufnahme zugänglich ist. Auf diese Weise wird das Anschließen der Druckluftleitung an die Druckluftquelle begünstigt.

Vorzugsweise wird das Fluid unter Druck in die Mischkammer eingeleitet. Das Fluid wird insbesondere von der Getränkezubereitungsmaschine bereitgestellt. Denkbar ist, dass eine Fluidquelle direkt an einen entsprechenden Fluidanschluss der Kartuschenaufnahme angekoppelt wird, sobald das Kartuschensystem in die Getränkezubereitungsmaschine eingesetzt wird. Der Fluidanschluss steht dabei über eine Fluidleitung in Fluidverbindung mit der Mischkammer. Dies hat den Vorteil, dass eine Rückkontamination in Richtung der Getränkezubereitungsmaschine wirksam vermieden wird, weil der Fluidanschluss insbesondere sofort beim Einsetzen des Kartuschensystems unter Druck steht und somit verhindert wird, dass Getränkesubstanz in Richtung der Fluidleitung und insbesondere in Richtung der Fluidquelle der Getränkezubereitungsmaschine wandert. Die Getränkesubstanz und das Getränk kann sich ausgehend von der Mischkammer somit lediglich in Richtung des Getränkeauslasses bewegen. Das Fluid umfasst insbesondere Wasser, vorzugsweise unter Druck stehendes, gekühltes und/oder karbonisiertes Trinkwasser.

Ein weiterer Gegenstand der vorliegenden Erfindung ist eine Getränkezubereitungsmaschine, umfassend ein Kartuschensystem gemäß einer Ausführungsform der vorliegenden Erfindung. Das Kartuschensystem ist in die Getränkezubereitungsmaschine einsetzbar. Im eingesetzten Zustand des Kartuschensystems in der Getränkezubereitungsmaschine kann das Getränk zubereitet werden. Nach der erfolgten Zubereitung kann das Kartuschensystem wieder aus der Getränkezubereitungsmaschine entnommen werden.

Ein weiterer Gegenstand der vorliegenden Erfindung ist ein Verfahren zur Herstellung eines Kartuschensystems gemäß Anspruch 14.

Erfindungsgemäss ist es vorgesehen, dass das Abdichtungsmittel vor dem dritten Verfahrensschritt und/oder während des dritten Verfahrensschritts, insbesondere vor, während und/oder nach dem zweiten Verfahrensschritt, an einer von der Kartusche abgewandten Oberseite des Dichtelements ausgebildet und/oder angeordnet wird.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- Figur 1: zeigt eine schematische Seitenansicht einer Kartusche eines Kartuschensystems gemäß einer beispielhaften Ausführungsform der vorliegenden Erfindung
- Figur 2: zeigt eine schematische Schnittansicht der Kartusche entlang der in der Figur 1 gezeigten Schnittebene B-B.
- Figur 3a: zeigt eine schematische Detailansicht des Mündungsbereichs der Kartusche entlang der in der Figur 1 gezeigten Schnittebene B-B.
- Figur 3b: zeigt eine schematische Detailansicht des Mündungsbereichs einer Kartusche gemäß einer beispielhaften Ausführungsform der vorliegenden Erfindung.
- Figur 4: zeigt eine schematische perspektivische Ansicht einer entlang der in der Figur 1 gezeigten Schnittebene B-B geschnittenen Kartusche.
- Figur 5: zeigt eine schematische perspektivische Ansicht einer geschnittenen Kartusche eines Kartuschensystems gemäß einer nicht-erfindungsgemässenAusführungsform.
- Figuren 6a und 6b: zeigen schematische perspektivische Ansichten einer geschnittenen Kartusche für ein Kartuschensystem gemäß einer nicht-erfindungsgemässenAusführungsform.
- Figur 7: zeigt eine schematische perspektivische Ansicht einer geschnittenen Kartusche für ein Kartuschensystem gemäß einer nicht-erfindungsgemässenAusführungsform.
- Figur 8: zeigt eine schematische perspektivische Ansicht einer geschnittenen Kartusche eines Kartuschensystems gemäß einer weiteren nicht-erfindungsgemässen Ausführungsform.
- Figuren 9a, 9b und 9c: zeigen eine perspektivische Darstellung, eine schematische Schnittbildansicht und das allgemeine Funktionsprinzip eines Kartuschensystems gemäß einer beispielhaften ersten Ausführungsform der vorliegenden Erfindung.
- Figuren 10a, 10b und 10c: zeigen schematische Ansichten eines Kartuschensystems gemäß einer beispielhaften zweiten Ausführungsform der vorliegenden Erfindung.
- Figuren 11a, 11b und 11c: zeigen schematische Ansichten eines Kartuschensystems gemäß einer beispielhaften dritten Ausführungsform der vorliegenden Erfindung.
- Figur 12: zeigt eine schematische perspektivische Ansicht eines geschnittenen Dichtelements gemäß einer beispielhaften Ausführungsform der vorliegenden Erfindung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

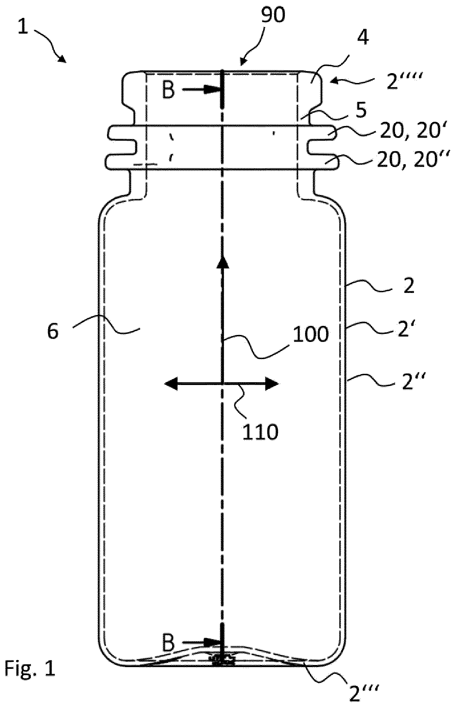

In **Figur 1** ist eine schematische Seitenansicht einer Kartusche 2 für ein Kartuschensystem 1 gemäß einer beispielhaften Ausführungsform der vorliegenden Erfindung dargestellt. Die Kartusche 2 umfasst einen napfförmigen hohlen Hauptkörper 2', mit dessen Hilfe ein Reservoir 6 für eine Getränkesubstanz 7 ausgebildet ist. Napfförmig ausgebildet bedeutet hierbei, dass der Hauptkörper 2' einen Kartuschenboden 2‴ (in der Zeichnung unten dargestellt) und eine vom Kartuschenboden 2‴ rechtwinklig (insbesondere in Richtung der nicht dargestellten Kartuschenaufnahme 10) abstehende Kartuschenwandung 2" aufweist. Die Kartuschenwandung 2" ist dabei zumindest teilweise zylinderförmig und umlaufend ausgebildet, während der Kartuschenboden 2‴ in diesem Beispiel eine kreisrunde Ausgestaltung aufweist. Der Hauptkörper 2' der Kartusche 2 oder die Kartusche 2 selbst ist vorzugsweise durch oder zumindest mithilfe einer Glasflasche ausgebildet. Das Reservoir 6 der Kartusche 2 kann mit einer Getränkesubstanz 7 gefüllt werden. In Figur 1 ist ferner eine zentrale Erstreckungsachse 100 der Kartusche 2 gezeigt, die eine axiale Richtung der Kartusche 2 darstellt, und eine Radialachse 110, die senkrecht auf der zentralen Erstreckungsachse 100 steht und eine radiale Richtung darstellt. Es ist alternativ denkbar, dass der Flansch 4 das Verbindungsmittel 20, beispielsweise ein Außengewinde, aufweist.

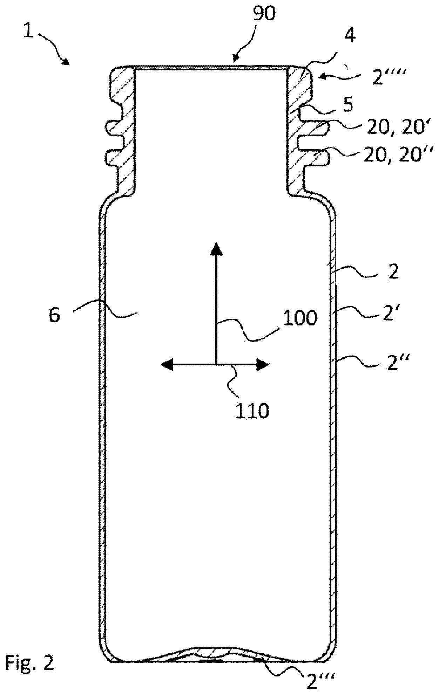

Auf einer dem Kartuschenboden 2‴ in axialer Richtung gegenüberliegenden Seite weist die Kartusche 2 eine Öffnung 90 auf, die mit einem Dichtelement 18 verschließbar ist. Zur Anbringung und Befestigung des Dichtelements 18 weist die Kartusche 2 einen Flansch 4 auf, der als verbreiterter Mündungsbereich der Kartuschenwandung 2" an einem Rand 2ʺʺ der Kartuschenwandung 2" ausgebildet ist. Die Öffnung 90 der Kartusche 2 ist somit durch den Flansch 4 umringt. Ferner umfasst die Kartusche 2 ein Verbindungsmittel 20, das durch einen Rastwulst 20' und einen weiteren Rastwulst 20" gebildet ist. Das Verbindungsmittel 20 ist zur Verbindung der Kartusche 2 mit einer Kartuschenaufnahme 10 ausgebildet. Ferner ist die radiale Ausdehnung der Rastwulste 20', 20" um den Umfang der Kartusche 2 nicht konstant. Insbesondere ist die radiale Ausdehnung der Rastwulste 20', 20" auf einer Seite der Kartusche größer als auf der gegenüberliegenden Seite (siehe Figur 2).

In **Figur 2** ist eine schematische Schnittansicht der in der Figur 1 dargestellten Kartusche 2 entlang der in der Figur 1 gezeigten Schnittebene B-B dargestellt. Die radiale Ausdehnung der Rastwulste 20', 20" ist um den Umfang der Kartusche 2 nicht konstant. Insbesondere ist die radiale Ausdehnung der Rastwulste 20', 20" auf einer Seite der Kartusche (rechte Seite in Figur 2) größer als auf der gegenüberliegenden Seite (linke Seite in Figur 2). Es ist somit eine Abflachung in einem Bereich des Verbindungsmittels 20 ausgebildet. Hierdurch wird eine Verdrehsicherung für die Kartusche 2 in der Kartuschenaufnahme 10 realisiert, sodass, wenn die Kartusche 2 mit der Kartuschenaufnahme 10 verbunden ist, vorteilhafterweise eine festgelegte relative Orientierung zwischen der Kartusche 2 mit der Kartuschenaufnahme 10 ausgebildet ist. Die Kartuschenaufnahme 10 weist hierfür entsprechende Gegenverbindungsmittel mit einer Abflachung, insbesondere Rastsicken mit sich um den Umfang der Rastsicken ändernden Tiefen, auf (nicht dargestellt). Da der Flansch 4 ein von dem Verbindungsmittel 20 separater Bereich ist, ist trotz dieser Abflachung des Rastmittels (bzw. des Verbindungsmittels 20) dennoch vorteilhafterweise die Verwendung einer kreisrunden Crimpkappe 180 als Dichtelement 18 möglich, die um den insbesondere kreisrunden Flansch 4 gecrimpt wird.

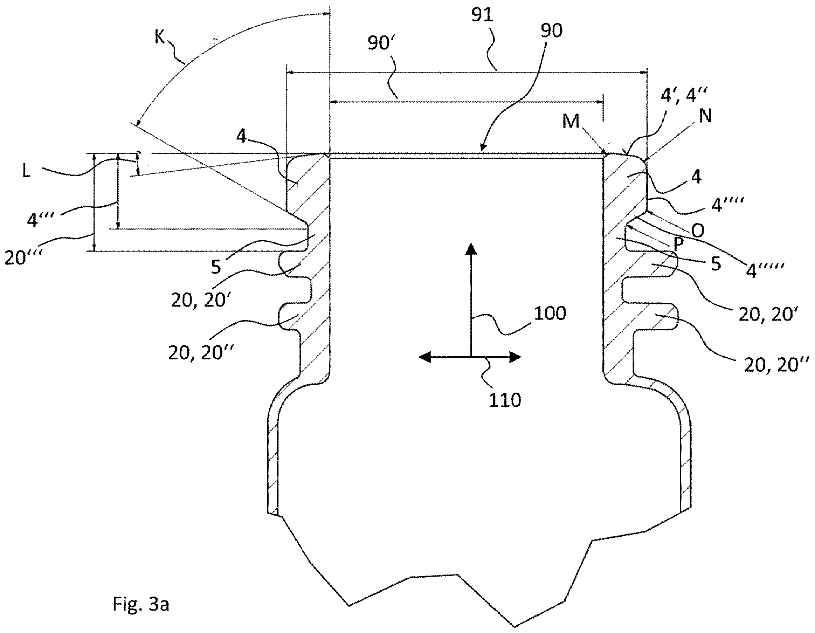

In **Figur 3a** ist eine schematische Schnittansicht der in der Figur 1 gezeigten Kartusche 2 entlang der in der Figur 1 gezeigten Schnittebene B-B dargestellt, wobei lediglich der oberer Bereich der Kartusche 2 in einer vergrößerten Detailansicht dargestellt ist. Der Flansch 4 stellt das dem Kartuschenboden 2‴ in axialer Richtung gegenüberliegende Ende der Kartusche 2 dar und ist um die Öffnung 90 der Kartusche 2 ausgebildet. Die Öffnung 90 ist vorzugsweise kreisrund ausgebildet und hat bevorzugt einen Durchmesser 90' von mindestens 18 mm. In der dargestellten Ausführungsform beträgt der Durchmesser 90' der Öffnung 22 mm (mit insbesondere maximal 15% Fertigungstoleranz). Es sind auch andere Werte für den Durchmesser 90' denkbar.

Der Außendurchmesser 91 des Flansches 4 (von Außenseite 4ʺʺ zu Außenseite 4ʺʺ des Flansches 4) beträgt vorzugsweise maximal 29 mm (mit insbesondere maximal 15% Fertigungstoleranz). Es sind jedoch auch andere Werte für den Außendurchmesser 91 denkbar.

An der von dem Kartuschenboden 2‴ abgewandten Oberseite 4' des Flansches 4 ist eine Stirnfläche 4" des Flansches 4 ausgebildet. Die Stirnfläche 4" geht an ihrem radial innenliegenden Ende mithilfe eines ersten Krümmungsradius M in eine Innenseite der Kartusche 2 über. Der erste Krümmungsradius M verhindert besonders vorteilhaft, dass das Dichtelement 18 in diesem Bereich ungewollt aufreißen kann. Der erste Krümmungsradius M ist in der dargestellten Ausführungsform 0,6 mm (mit insbesondere maximal 15% Fertigungstoleranz). Es kommen jedoch auch andere Werte für den ersten Krümmungsradius M infrage.

Die Stirnfläche 4" bzw. die Oberseite 4' des Flansches 4 ist nicht parallel zur Radialachse 110 angeordnet, sondern fällt in radiale Richtung von innen nach außen (also mit größer werdendem Abstand zur zentralen Erstreckungsachse 100) In Richtung des Kartuschenbodens 2‴ ab. Somit weist die Stirnfläche 4" einen oberen Öffnungswinkel L zur Radialachse 110 auf. In der gezeigten Ausführungsform ist der Öffnungswinkel L = 7°. Es sind jedoch auch andere Werte für den Öffnungswinkel L denkbar. Die Stirnfläche 4" kann insbesondere auch senkrecht zu der zentralen Erstreckungsachse 100 der Kartusche ausgebildet sein, also parallel zu der Radialachse 110 verlaufen. Ein paralleler Verlauf der Stirnfläche 4" zur Radialachse 110 (also insbesondere mit Öffnungswinkel L = 0°) ist besonders vorteilhaft, wenn das Dichtelement 18 als Dichtfolie 18" ausgebildet ist und auf der Stirnfläche 4" des Flansches 4, beispielsweise durch induktives Schweißen, befestigt wird.

In ihrem radial außenliegenden Ende geht die Oberseite 4' bzw. die Stirnfläche 4" des Flansches 4 mit einem zweiten Krümmungsradius N in eine Außenseite 4ʺʺ des Flansches 4 über, wobei sich die Außenseite 4ʺʺ umlaufend um die Kartusche 2 erstreckt. Die Außenseite 4ʺʺ des Flansches 4 erstreckt sich insbesondere parallel zur zentralen Erstreckungsachse 100. Durch den zweiten Krümmungsradius N kann in besonders vorteilhafter Weise ein Crimpen eines Dichtelements 18 um den Flansch 4 verbessert werden, da keine scharfe Kante vorhanden ist. Der zweite Krümmungsradius N weist in der dargestellten Ausführungsform einen Radius von 1,3 mm auf (mit insbesondere maximal 15% Fertigungstoleranz). Es kommen alternativ jedoch auch andere Werte für den zweiten Krümmungsradius N infrage.

In ihrem unteren Ende geht die Außenseite 4ʺʺ des Flansches 4 mit einem dritten Krümmungsradius O in eine Unterseite 4‴ʺ des Flansches 4 über. Es ist möglich, dass durch den dritten Krümmungsradius O in besonders vorteilhafter Weise das Crimpen eines Dichtelements 18 um den Flansch 4 verbessert wird. Der dritte Krümmungsradius O weist in der dargestellten Ausführungsform einen Radius von 0,5 mm auf (mit insbesondere maximal 15% Fertigungstoleranz). Es kommen alternativ jedoch auch andere Werte für den dritten Krümmungsradius O infrage.

Die Unterseite 4‴ʺ des Flansches 4 weist einen unteren Öffnungswinkel K von 60° zur zentralen Erstreckungsachse 100 auf (und somit einen Winkel von 30° zur Radialachse 110). Es kommen alternativ auch andere Werte für den unteren Öffnungswinkel K von 60° infrage.

Angrenzend an die Unterseite 4‴ʺ des Flansches 4 ist ein Nebenbereich 5 der Kartuschenwandung 2" ausgebildet. Als Übergang zwischen der Unterseite 4‴ʺ des Flansches 4 und dem Nebenbereich 5 ist ein vierter Krümmungsradius P ausgebildet. Der vierte Krümmungsradius P weist in der dargestellten Ausführungsform einen Radius von 0,7 mm auf (mit insbesondere maximal 15% Fertigungstoleranz). Es kommen alternativ jedoch auch andere Werte für den vierten Krümmungsradius P infrage.

Die Höhe 4‴ des Flansches 4, inklusive des durch den vierten Krümmungsradius P gebildeten Bereichs, ist in der dargestellten Ausführungsform 6,1 mm (mit insbesondere maximal 15% Fertigungstoleranz). Es kommen jedoch auch andere Werte für die Höhe 4‴ infrage. Durch seine Höhe 4‴ kann der Flansch 4 besonders vorteilhaft dazu verwendet werden, ein Dichtelement 18, das um den Flansch 4 gecrimpt wird, an der Kartusche 2 zu befestigen.

Das Verbindungsmittel 20 der Kartusche 2, durch das eine Verbindung mit der Kartuschenaufnahme 10 herstellbar ist, ist in axiale Richtung (also parallel zur zentralen Erstreckungsachse 100) in Richtung des Kartuschenbodens 2‴ von dem Flansch 4 versetzt ausgebildet. Das Verbindungsmittel 20 und der Flansch 4 sind somit separate und insbesondere voneinander beabstandete Elemente. Zwischen dem Verbindungsmittel 20 und dem Flansch 4 ist in axiale Richtung der Nebenbereich 5 der Kartuschenwandung 2" angeordnet. Der Nebenbereich 5 grenzt dabei an seinem oberen Ende an den Flansch 4 und an seinem unteren Ende and den Rastwulst 20' an, sodass durch den Nebenbereich 5 zwischen dem Flansch 4 und dem Verbindungsmittel 20 eine Sicke ausgebildet ist. Im Nebenbereich 5 ist die Wandstärke der Kartuschenwandung 2" dabei geringer als im Bereich des Flansches 4, sodass der Flansch 4 ausgehend vom Nebenbereich 5 in die radiale Richtung absteht. Der Abstand 20‴ des Verbindungselements 20, insbesondere des Rastwulstes 20', zur durch die Stirnfläche 4" gebildeten Oberkante des Flansches 4 beträgt 7,9 mm (mit insbesondere maximal 15% Fertigungstoleranz).

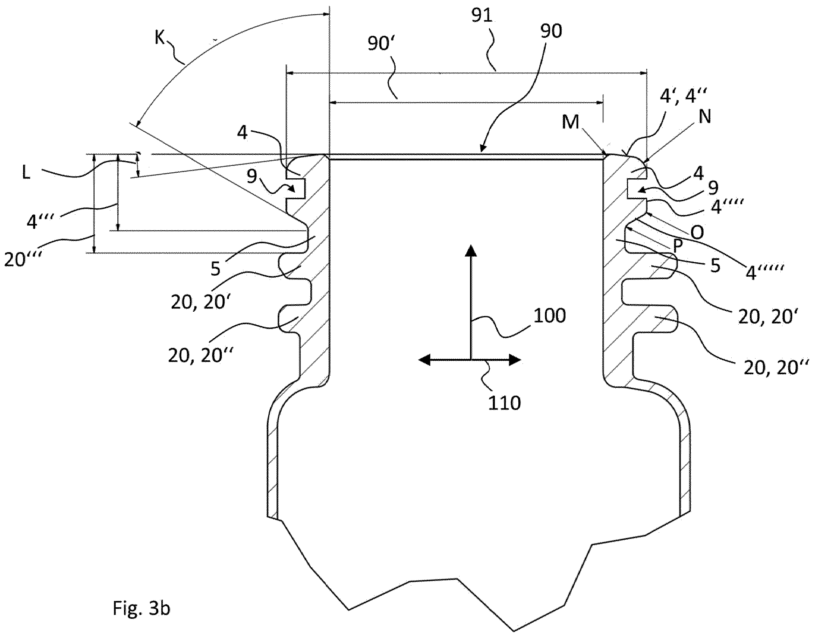

In **Figur 3b** ist eine schematische Schnittansicht einer Kartusche 2 gemäß einer Ausführungsform der vorliegenden Erfindung dargestellt. Die in Figur 3b dargestellte Ausführungsform ähnelt der in Figur 3a gezeigten Ausführungsform, mit dem Unterschied, dass der Flansch 4 eine umlaufende Einbuchtung 9 an seiner Außenseite 4ʺʺ aufweist. Die Einbuchtung 9 ist insbesondere als radiale Verdünnung des Flansches 4 ausgebildet. Der als verdickter Bereich der Kartuschenwandung 2" ausgebildete Flansch 4 ist somit lokal verdünnt. Eine solche Verdünnung ist insbesondere besonders vorteilhaft, wenn die Kartusche 2 bzw. die Kartuschenwandung 2" aus Kunststoff gefertigt ist. Es ist besonders vorteilhaft denkbar, dass die beiden durch die Einbuchtung 9 des Flansches 4 ausgebildeten Ringe des Flansches 4 (oberhalb und unterhalb der Einbuchtung 9) durch einen oder mehrere vertikale Stege verstärkt sind, um Crimpkräfte vorteilhaft aufnehmen zu können.

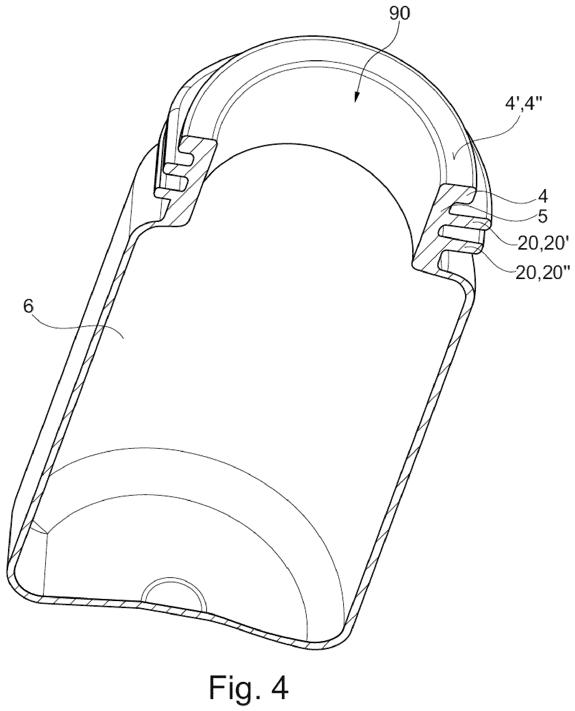

In **Figur 4** ist eine schematische perspektivische Ansicht einer entlang der Schnittebene B-B geschnittenen Kartusche 2 gemäß dem in den Figuren 1 bis 3a dargestellten Ausführungsbeispiel gezeigt.

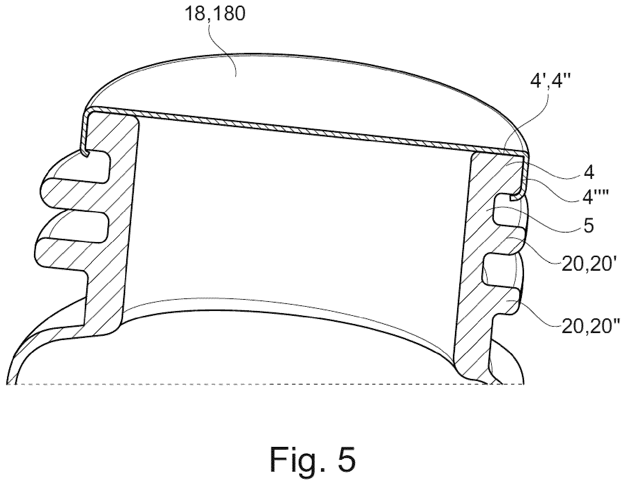

Die in Fig. 5, 6a,b, 7 und 8 gezeigte Crimpkappe 180 ist nicht mehr Teil der Erfindung und dient lediglich zur Erläuterung bzw. Veranschaulichung der vorliegenden Erfindung. Ansonsten sind die in den jeweiligen Figuren gezeigten Merkmale und Ausführungsformen als Teil der Erfindung zu verstehen.

In **Figur 5** ist eine schematische perspektivische Schnittansicht einer Kartusche 2 für ein Kartuschensystem 1 gemäß einer nicht-erfindungsgemässen Ausführungsform gezeigt. Die Öffnung 90 der Kartusche 2 ist hierbei durch ein als Crimpkappe 180 ausgebildetes Dichtelement 18 verschlossen. Die Crimpkappe 180 ist um den Flansch 4 der Kartusche 2 gecrimpt und hierdurch an der Kartusche 4 befestigt. Das Dichtelement 18 umschließt hierbei sowohl die Oberseite 4' des Flansches 4 als auch die Außenseite 4ʺʺ des Flansches und ist um die Bereiche des Flansches 4 mit den Krümmungsradien N und O geformt. Das Dichtelement 18 endet im Bereich der Unterseite 4‴ʺ der Flansches 4. Hierdurch kann ein besonders vorteilhafter Verschluss der Kartusche 2 erreicht werden. Das gecrimpte Dichtelement 18 hält auch hohen Innendrücken, die innerhalb der Kartusche 2, insbesondere in dem Reservoir 6, ausgebildet sein können, stand. Somit kann ein Einschluss einer Getränkesubstanz 7 unter hohem Druck im Reservoir 6 erfolgen und somit eine für viele Getränkesubstanzen vorteilhafte Vorkarbonisierung. Die Crimpkappe 180 ist vorzugsweise aus einem Metall gefertigt, insbesondere aus Aluminium. Auf der Unterseite der Crimpkappe 180, also der Seite der Crimpkappe 180, die in Richtung der Kartusche 2 gewandt ist, ist vorzugsweise eine Beschichtung, insbesondere eine Siegelschicht, wie beispielsweise ein Lack und/oder ein laminierter oder coextrutierter Kunststoff angeordnet. Die Siegelschicht ist insbesondere zwischen dem Flansch 4 und der Crimpkappe 180 angeordnet. Mithilfe der Siegelschicht ist eine vorteilhafte Abdichtung möglich. Es ist optional zusätzlich oder alternativ möglich, dass zwischen der Crimpkappe 180 und dem Flansch 4 eine Dichtung angeordnet ist. Es ist beispielsweise denkbar, dass die Dichtung ringförmig oder vollflächig (also geschlossen, insbesondere scheibenförmig) ausgebildet ist. Die Dichtung kann in die Crimpkappe 180 eingebracht sein, insbesondere gesiegelt, geklebt, und/oder geschäumt. Mithilfe der Dichtung ist eine zusätzlich verbesserte Abdichtung möglich. Es ist ferner denkbar, dass auf der von der Kartusche 2 abgewandten Oberseite der Crimpkappe 180 ein Schutzlack aufgebracht ist.

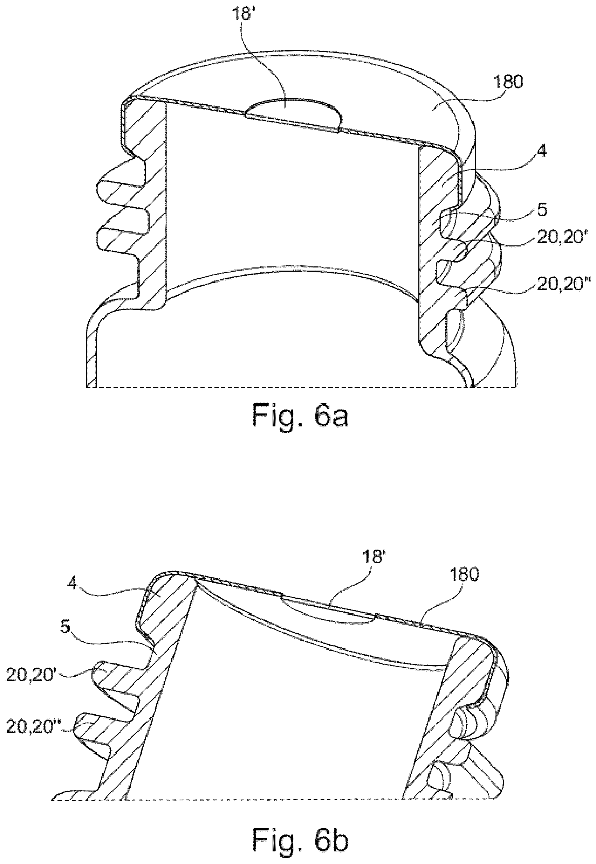

In den **Figuren 6a und 6b** sind schematische perspektivische Schnittansichten einer Kartusche 2 für ein Kartuschensystem 1 gemäß einer nicht-erfindungsgemässen Ausführungsform gezeigt. Wir auch bei dem in Figur 5 dargestellten Ausführungsbeispiel ist das Dichtelement 18 bzw. ein Dichtkörper des Dichtelements 18 als Crimpkappe 180 ausgebildet. Das Dichtelement 18, also die Crimpkappe 180, umfasst eine Vorprägung bzw. Vorstanzung 18', die mittig an der Crimpkappe 180 ausgebildet ist. Alternativ ist es auch denkbar, dass die Vorstanzung 18' von der Mitte des Dichtelements 18 versetzt ausgebildet ist. Durch die Vorstanzung 18', insbesondere durch den Rand der Vorstanzung 18', ist vorteilhafterweise eine Sollbruchstelle des Dichtelements 18 ausgebildet, die bei einem Kontakt des Dichtelements 18 mit einem Aufstechdorn 73 aufgerissen wird. Somit kann eine vorteilhafterweise definierte Öffnung in dem Dichtelement 18 erzeugt werden. Es ist denkbar, dass auf der Unterseite der Crimpkappe 180, also der Seite der Crimpkappe 180, die in Richtung der Kartusche 2 gewandt ist, vorzugsweise eine Siegelschicht, insbesondere ein Lack und/oder ein laminierter oder coextrutierter Kunststoff, vorzugsweise umfassend Polypropylen und/oder einen anderen Kunststoff, angeordnet ist. Die Siegelschicht ist insbesondere zwischen dem Flansch 4 und der Crimpkappe 180 angeordnet. Mithilfe der Siegelschicht ist eine vorteilhafte Abdichtung möglich. Die Vorprägung bzw. Vorstanzung 18' ist vorzugsweise so ausgelegt, dass die Siegelschicht durch die Vorprägung bzw. Vorstanzung 18' unverletzt bleibt. Es ist optional zusätzlich oder alternativ möglich, dass zwischen der Crimpkappe 180 und dem Flansch 4 eine Dichtung angeordnet ist. Es ist beispielsweise denkbar, dass die Dichtung ringförmig oder vollflächig (also geschlossen, insbesondere scheibenförmig) ausgebildet ist. Die Dichtung kann in die Crimpkappe 180 eingebracht sein, insbesondere gesiegelt, geklebt, und/oder geschäumt. Mithilfe der Dichtung ist eine zusätzlich verbesserte Abdichtung möglich. Es ist ferner denkbar, dass auf der von der Kartusche 2 abgewandten Oberseite der Crimpkappe 180 ein Schutzlack aufgebracht ist.

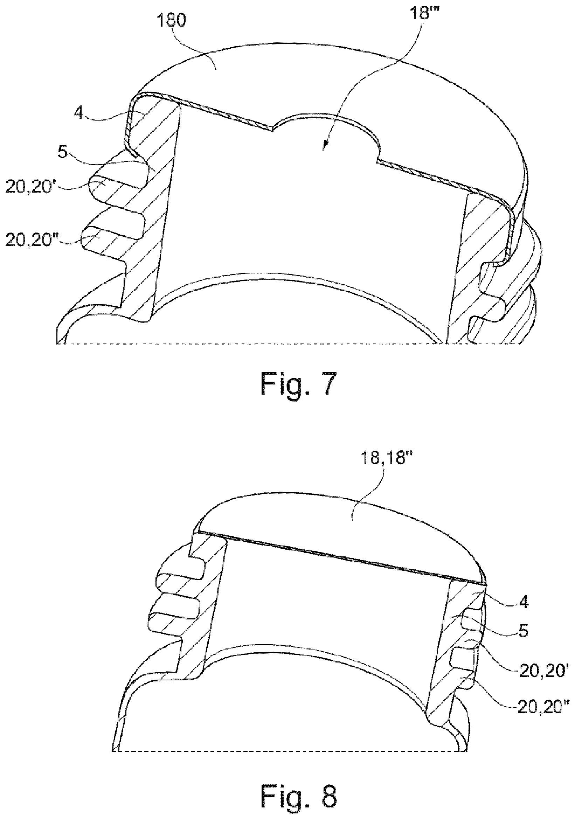

In **Figur 7** ist eine schematische perspektivische Schnittansicht einer Kartusche 2 für ein Kartuschensystem 1 gemäß einer nicht-erfindungsgemässen Ausführungsform gezeigt. Wir auch bei dem in Figur 5 dargestellten Ausführungsbeispiel ist das Dichtelement 18 bzw. ein Dichtkörper des Dichtelements 18 als Crimpkappe 180 ausgebildet. Das Dichtelement 18, also die Crimpkappe 180, umfasst eine mittige Durchgangsöffnung 18‴, insbesondere eine Bohrung. Alternativ ist es auch denkbar, dass die Durchgangsöffnung 18‴ von der Mitte des Dichtelements 18 versetzt ausgebildet ist. Die Durchgangsöffnung 18‴ des Dichtelements 18 ist durch eine nicht dargestellte Dichtfolie 18" verschlossen. Die Dichtfolie18" kann dabei an der in Richtung der Kartusche 2 zeigenden Unterseite der Crimpkappe 180 oder an der von der Kartusche 2 abgewandten Oberseite der Crimpkappe 180 mit der Crimpkappe 180 verbunden sein. Die Dichtfolie 18" verschließt somit im Ausgangszustand des Kartuschensystems 1 die Durchgangsöffnung 18"'. Bei einem Kontakt des Dichtelements 18 mit einem Aufstechdorn 73 wird die Dichtfolie 18" durchstochen. Somit kann eine vorteilhafterweise definierte Öffnung in dem Dichtelement 18 erzeugt werden. Es ist denkbar, dass auf der in Richtung der Kartusche 2 gewandten Unterseite der Crimpkappe 180 eine Siegelschicht, insbesondere ein Lack und/oder ein laminierter oder coextrutierter Kunststoff, vorzugsweise umfassend Polypropylen und/oder einen anderen Kunststoff, angeordnet ist. Die Siegelschicht ist insbesondere zwischen dem Flansch 4 und der Crimpkappe 180 angeordnet. Es ist optional zusätzlich oder alternativ möglich, dass zwischen der Crimpkappe 180 und dem Flansch 4 eine Dichtung angeordnet ist. Es ist beispielsweise denkbar, dass die Dichtung ringförmig oder vollflächig (also geschlossen, insbesondere scheibenförmig) ausgebildet ist. Die Dichtung kann in die Crimpkappe 180 eingebracht sein, insbesondere gesiegelt, geklebt, und/oder geschäumt. Mithilfe der Dichtung ist eine zusätzlich verbesserte Abdichtung möglich. Es ist ferner denkbar, dass auf der von der Kartusche 2 abgewandten Oberseite der Crimpkappe 180 ein Schutzlack aufgebracht ist. Alternativ zur gezeigten Crimpkappe 180 wäre auch eine Ausbildung des Dichtelements 18 als Schraubkappe denkbar. Beide Varianten (Crimpkappe 180 oder Schraubkappe) können zur Verbesserung der Abdichtung zusätzlich in Richtung des Flansches 4 und/oder in Richtung der Crimpkappe 180 oder Schraubkappe gesiegelt werden.

In **Figur 8** ist eine schematische perspektivische Schnittansicht einer Kartusche 2 für ein Kartuschensystem 1 gemäß einer weiteren nicht-erfindungsgemässen Ausführungsform gezeigt. Die Öffnung 90 der Kartusche 2 ist hierbei durch ein als Dichtfolie 18" ausgebildetes Dichtelement 18 verschlossen. Die Dichtfolie 18" ist auf der Oberseite 4' des Flansches 4, insbesondere an der Stirnfläche 4" des Flansches 4, befestigt. Hierbei ist ein Randbereich der Dichtfolie 18" auf der Oberseite 4' des Flansches 4 angeordnet und in diesem Randbereich am Flansch 4 befestigt. Vorzugsweise ist der Randbereich der Dichtfolie 18" an der Oberseite 4' des Flansches durch Schweißen, insbesondere durch induktives Schweißen befestigt. Es kommen jedoch auch andere Verfahren, insbesondere Klebeverfahren, zur Befestigung der Dichtfolie 18" an dem Flansch 4 infrage. Ein als Dichtfolie 18" ausgebildetes Dichtelement 18 kann besonders kostensparend ausgeführt werden und besonders vorteilhaft für Getränkesubstanzen 7 verwendet werden, für die ein vergleichsweise geringer Druck, insbesondere ein geringer Überdruck oder kein Überdruck, innerhalb des Reservoirs 6 zur ausreicht. Die Dichtfolie 18" ist insbesondere als Kunststofffolie, Metallfolie (insbesondere Aluminiumfolie) oder als Mehrschichtfolie aus Kunststoff und/oder Aluminium (und/oder einem oder mehreren weiteren Metallen) ausgebildet. Wie in Fig. 8 gezeigt, ist es möglich, dass die Dichtfolie 18" am Umfang über den Flansch 4 vorstehen kann. Hierdurch kann ein besonders vorteilhafter Toleranzausgleich erreicht werden.

Wie in den Figuren 5 bis 8 erkennbar, ist es ein weiterer besonderer Vorteil, dass der Flansch 4 zur Anbringung unterschiedlicher Dichtelemente 18 verwendet werden kann, insbesondere ohne, dass bauliche Änderungen an der Kartusche und notwendig sind. Hierdurch ist eine besonders kosteneffiziente und vielseitige Verwendung eines Kartuschendesigns möglich, da eine Kombination mit unterschiedlichen Dichtelementen 18 und Befestigungsverfahren für die Dichtelemente 18 an der Kartusche 2 möglich wird, sodass die Kartusche besonders vorteilhaft für Getränkesubstanzen 7 mit unterschiedlichen Anforderungen verwendet werden kann.

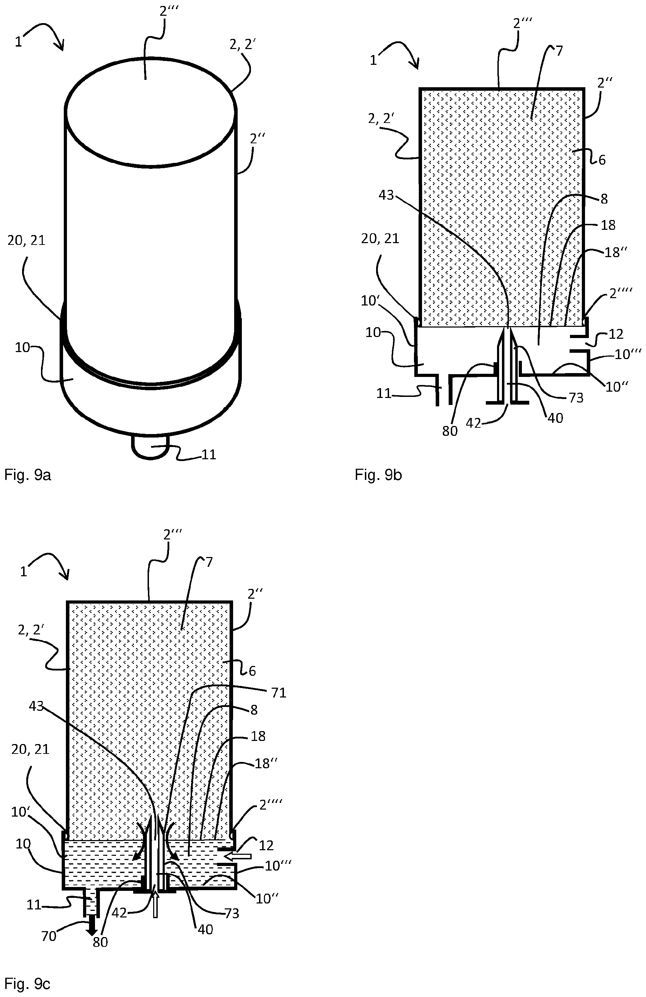

In **Figuren 9a, 9b und 9c** sind eine perspektivische Darstellung, eine schematische Schnittbildansicht und das allgemeine Funktionsprinzip eines Kartuschensystems 1 gemäß einer beispielhaften Ausführungsform der vorliegenden Erfindung dargestellt.

Das abgebildete Kartuschensystem 1 ist dazu vorgesehen, in eine Getränkezubereitungsmaschine (nicht dargestellt) eingesetzt zu werden, um ein Getränk 70 zuzubereiten. Das Kartuschensystem 1 weist hierfür die Kartusche 2, die mit einer Getränkesubstanz 7 gefüllt ist, und eine mit der Kartusche 2 verbundene Kartuschenaufnahme 10 auf. Innerhalb der Getränkezubereitungsmaschine wird mit Hilfe der Getränkesubstanz 7 und einer zusätzlichen Wasserquelle, im Folgenden als Fluidquelle 41 bezeichnet, ein entsprechendes Getränk 70 erzeugt. Die Kartusche 2 ist dabei vorzugsweise mit einer vorportionierten Menge an Getränkesubstanz 7, die zur Erzeugung einer gezielten Trinkportion, beispielsweise eine Trinkglasfüllung des gewünschten Getränks 70, notwendig ist, befüllt. Die Getränkesubstanz 7 ist insbesondere ein flüssiges und kohlensäurehaltiges Getränkekonzentrat in Form von Sirup.

Grundsätzlich stehen insbesondere eine Mehrzahl unterschiedlicher Kartuschensysteme 1 zur Verfügung, deren Kartuschen 2 bzw. Reservoirs 6 zur Erzeugung verschiedener Getränke 70 mit unterschiedlichen Getränkesubstanzen 7 befüllt sind. Wenn der Anwender des Systems 1 ein bestimmtes Getränk 70 trinken möchte, braucht er lediglich aus der Mehrzahl der unterschiedlichen Kartuschensysteme 1 dasjenige Kartuschensystem 1, welches die entsprechende Getränkesubstanz 7 zur Erzeugung des gewünschten Getränks 70 enthält, auswählen, in eine Halteeinheit der Getränkezubereitungsmaschine einsetzen und den Getränkeherstellungsprozess an der Getränkezubereitungsmaschine starten, beispielsweise durch Drücken eines Startknopfs, entsprechendes Berühren eines berührungssensitiven Displays, durch Gestik- oder Sprachsteuerung oder mittels einer geeigneten Applikation auf einem Mobiltelefon. Denkbar ist auch, dass der Getränkeherstellungsprozess automatisch startet, wenn das Einlegen eines neuen Kartuschensystems 1 in die Halteeinheit erkannt wird. In jedem der vorgenannten Fälle wird das gewünschte Getränk 70 sodann automatisch erzeugt, in ein Trinkgefäß geleitet und dem Anwender somit bereitgestellt. Anschließend wird das verbrauchte Kartuschensystem 1 entfernt und entsorgt. Die Getränkezubereitungsmaschine ist nun wieder bereit, um mit einem beliebigen neuen Kartuschensystem 1 befüllt zu werden, um ein weiteres Getränk 70 zu erzeugen.

Die Getränkesubstanz 7 umfasst vorzugsweise flüssige Pre-Mix-Bestandteile für Erfrischungsgetränke, wie koffein-, kohlensäure-, frucht- und/oder zuckerhaltige Limonaden und Säfte, Bier(misch)getränke oder sonstige alkoholische oder nicht alkoholische (Misch-) Getränke.

Das Kartuschensystem 1 umfasst eine Kartusche 2, beispielsweise eine gemäß einer oder mehrerer der Figuren 1 bis 8 ausgebildete Kartusche 2. Der Bereich um den Flansch 4 der Kartusche ist in den Figuren 9a bis 9c nicht detailliert dargestellt. Alternativ umfasst die Kartusche 2 keinen Flansch 4.

In vorteilhafter Weise ist mithilfe eines Abdichtungsmittels 14 eine Abdichtung zwischen der Kartusche 2 und der Kartuschenaufnahme 10 ausgebildet. Der Bereich um das Abdichtungsmittel 14 ist in den Figuren 9a bis 9c nicht detailliert dargestellt.

Die Kartusche 2 ist mit der Kartuschenaufnahme 10 fest oder reversibel verbunden. Die Kartuschenaufnahme 10 wird insbesondere nach dem Herstellen des Hauptkörpers 2', nach dem Befüllen der Kartusche 2 mit der Getränkesubstanz 7 und nach und/oder während dem Verschließen des Reservoirs 6 durch Aufbringen des Dichtelements 18 mit der Kartusche 2 verbunden. Die Kartuschenwandung 2" weist zu diesem Zweck vorzugsweise umlaufende Verbindungsmittel 20, insbesondere in Form einer oder mehrerer umlaufender Rastwulste 20', 20" oder Rastsicken, auf. Die Kartuschenaufnahme 10 weist optional zum Verbindungsmittel 20 komplementäre Gegenverbindungsmittel 21, insbesondere in Form eines oder mehrere umlaufender Rastwulste und/oder Rastsicken, auf, welche beim Verbinden der Kartusche 2 mit der Kartuschenaufnahme 10 in die Verbindungsmittel 20 einrasten. Vorzugsweise wird durch die Verbindungsmittel 20 und/oder durch weitere Elemente eine Verdrehsicherung für die Kartusche 2 und die Kartuschenaufnahme 10 ausgebildet. Denkbar ist, dass die Kartuschenwandung 2" und die Kartuschenaufnahme 10 zusätzlich miteinander verklebt, verschweißt und/oder verpresst werden. Es ist insbesondere denkbar, dass eine zusätzliche Abdichtung zwischen der Kartusche 2 und der Kartuschenaufnahme 10 ausgebildet ist, beispielsweise mithilfe eines O-Rings, der insbesondere im Bereich der Verbindungsmittels 20 angeordnet, insbesondere zwischen den Rastwulsten 20', 20" eingelegt, ist. Alternativ oder zusätzlich kann die zusätzliche Abdichtung beispielsweise durch eine Ausführung der Kartuschenaufnahme 10 mithilfe eines Zweikomponenten-Kunststoffs erfolgen. Hierdurch kann eine vorteilhafte Abdichtung vorzugsweise auch dann erfolgen, wenn die Kartuschenwandnung eine vergleichsweise große Toleranz von beispielsweise ± 0,3 mm aufweist.

Die Kartusche 2 ist vorzugsweise derart ausgebildet, dass sie einem Innendruck von bis zu 12 bar, bevorzugt bis zu 10 bar, besonders bevorzugt bis zu 8 bar und ganz besonders bevorzugt bis zu 6 bar ohne Aufzuplatzen standhält (bei einer Temperatur von 20° C und einem Außendruck von 1 bar). Das Reservoir 6 umfasst dabei vorzugsweise ein Volumen zwischen 10 und 500 Milliliter, besonders bevorzugt zwischen 30 und 90 Milliliter und ganz besonders bevorzugt von im Wesentlichen 60 Milliliter.

Die Kartuschenaufnahme 10 weist eine Mischkammer 8 auf, welche während des Getränkeherstellungsprozesses in Fluidverbindung mit dem Reservoir 6 steht, so dass mit Hilfe einer Kartuschenentladeeinrichtung der Kartuschenaufnahme 10 die Getränkesubstanz 7 zumindest teilweise aus dem Reservoir 6 in die Mischkammer 8 überführt werden kann. Die Kartuschenentladeeinrichtung umfasst zu diesem Zweck eine Druckluftleitung 40. Ein Ende der Druckluftleitung 40 ist mit einem Druckluftanschluss 42 verbunden, der mit einer Druckluftquelle der Getränkezubereitungsmaschine verbunden werden kann, um Druckluft in die Druckluftleitung 40 einzuleiten, während das andere Ende in einen Druckluftauslass mündet, der in Richtung des Reservoirs 6 geöffnet ist und Druckluft in das Reservoir 6 einleitet. Das Einleiten der Druckluft bewirkt, dass die Getränkesubstanz 7 in die Mischkammer 8 gedrückt wird. Es ist denkbar, dass sich die Druckluftleitung 40 im Inneren des Aufstechdorns 73 von dem äußeren Druckluftanschluss 42 zum Anschluss an eine Druckluftquelle bis zu einem Druckluftauslass 43 im Bereich einer Spitze des Aufsteckdorns erstreckt.

In die Mischkammer 8 mündet ferner eine Fluidzuführung 12 der Kartuschenaufnahme 10, welche durch eine Fluidquelle der Getränkezubereitungsmaschine gespeist wird. Denkbar ist, dass die Fluidzuführung eine Schnellkupplung aufweist, mit welcher die Fluidzuführung 12 an die Fluidquelle der Getränkezubereitungsmaschine angeschlossen werden kann. Die Schnellkupplung kann beispielsweise derart ausgebildet sein, dass beim Einsetzen des Kartuschensystems 1 in die Halteeinheit automatisch eine Fluidverbindung zwischen der Fluidquelle und der Mischkammer 8 über die Fluidzuführung 12 hergestellt wird. Während des Getränkeherstellungsprozesses gelangt über diese Fluidverbindung Fluid, insbesondere gekühltes und karbonisiertes Trinkwasser, von der Fluidzuführung 12 in die Mischkammer 8. Ferner gelangt während des Getränkeherstellungsprozesses Getränkesubstanz 7 von dem Reservoir 6 in die Mischkammer 8, wie vorstehend beschrieben. Durch Vermischung der Getränkesubstanz 7 mit dem Fluid in der Mischkammer 8 bildet sich das Getränk 70, welches die Mischkammer 8 sodann durch einen Getränkeauslauf 11 verlässt.

Die Kartuschenaufnahme 10 weist den Getränkeauslauf 11 auf, durch welchen das innerhalb der Mischkammer 8 erzeugte Getränk 70 die Mischkammer 8 verlässt und insbesondere direkt in das Trinkgefäß (nicht abgebildet) geleitet wird, d.h. ohne, dass Teile der Getränkezubereitungsmaschine in Kontakt mit dem Getränk 70 gelangen. Auf diese Weise wird Rücckontamination der Getränkezubereitungsmaschine verhindert. Das Trinkgefäß wird insbesondere direkt unterhalb des Getränkeauslaufs 11 angeordnet.

Nach Beendigung des Getränkeherstellungsprozesses wird das Kartuschensystem 1 aus der Halteeinheit entnommen, so dass die Getränkeherstellungsmaschine mit einem neuen und unverbrauchten Kartuschensystem 1 bestückt werden kann. Die Kartuschenaufnahme 10 kann optional wiederverwendet werden, indem es von der benutzten Kartusche 2 durch Lösen der Rastverbindung abgetrennt und auf eine neue Kartusche 2 geclipst wird. Es ist denkbar, dass auch die Kartusche 2 wiederverwendet werden kann. Insbesondere ist es denkbar, dass die Kartusche mit einer neuen Getränkesubstanz 7 befüllt und mit einem Dichtelement 18 abgedichtet werden kann.

Zur Herstellung der Fluidverbindung zwischen dem Reservoir 6 und der Mischkammer 8 weist die Kartuschenaufnahme 10 eine Dornführung 80 auf, in welcher ein Aufstechdorn 73 verschiebbar gelagert ist. Das Dichtelement 18 wird durch eine Überführung des verschiebbaren Aufstechdorns 73 zwischen einer eingefahrenen Position, in welcher der Aufstechdorn 73 von dem Dichtelement 18 beabstandet ist (vgl. Figur 9b), und einer ausgefahrenen Position, in welcher der Aufstechdorn 73 das Dichtelement 18 durchsticht (vgl. Figur 9c) und bis in das Reservoir 6 ragt, perforiert.

Die Außenwandung des Aufstechdorns 73 ist mit der Mehrzahl von Seitenkanälen 71 zum Leiten der Getränkesubstanz 7 vom Reservoir 6 in Richtung der Mischkammer 8, wenn das Dichtelement 18 durchstochen ist, versehen. Die Seitenkanäle 71 sind in Form von parallel zueinander verlaufenden einseitig offenen Nuten ausgebildet. Nach dem Durchstechen des Dichtelements 18 gelangen die Seitenkanäle 71 in Fluidverbindung mit dem Reservoir 6, so dass die Getränkesubstanz 7 die Ränder des durchstochenen Dichtelements 18 in Richtung der Mischkammer 8 umfließen kann.

Der Querschnitt der Seitenkanäle 71 und/oder die Anzahl der Seitenkanäle 71 ist dabei vorzugsweise an die Viskosität der Getränkesubstanz 7 angepasst ist, so dass die Seitenkanäle 71 den Fluss der Getränkesubstanz 7 in Richtung Mischkammer 8 kontrollieren bzw. begrenzen. Bei einer hohen Viskosität werden mehrere Seitenkanäle 71 und/oder Seitenkanäle 71 mit größerem Querschnitt verwendet, während bei einer niedrigeren Viskosität weniger Seitenkanäle 71 und/oder Seitenkanäle 71 mit geringerem Querschnitt vorgesehen sind.

In den Aufstechdorn 73 ist ferner die Druckluftleitung 40 integriert, welche als Kartuschenentladeeinrichtung fungiert. Die Druckluftleitung 40 mündet am Ende des Aufstechdorns 73 in das Reservoir 6, wenn sich der Aufstechdorn 73 in der ausgefahrenen Position befindet. An einer dem Reservoir 6 insbesondere abgewandten Seite des Aufstechdorns 73 ist der Druckluftanschluss 42 ausgebildet, der somit von außerhalb der Kartuschenaufnahme 10 zugänglich und an die Druckluftquelle der Getränkezubereitungsmaschine anschließbar ist.

Vorzugsweise wird der Aufstechdorn 73 beim oder nach dem Einsetzen des Kartuschensystems 10 in die Getränkezubereitungsmaschine oder nach dem Starten des Getränkeherstellungsprozesses von der eingefahrenen Position in die ausgefahrene Position überführt, vorzugsweise durch ein feststehendes Auslöseelement der Halteeinheit, gegen welches der Aufstechdorn 73 gedrückt wird. Der Aufstechdorn 71 ist vorzugsweise als Kunststoffteil und besonders bevorzugt als Kunststoff-Spritzgussteil ausgebildet.

Es ist vorzugsweise denkbar, dass sowohl die Fluidquelle als auch die Druckluftquelle direkt an die Fluidzuführung 12 bzw. den Druckluftanschluss 42 angekoppelt werden, sobald das Kartuschensystem 1 in die Getränkezubereitungsmaschine eingesetzt wird oder ein Getränkeherstellungsprozess gestartet wird und insbesondere bevor das Dichtelement 18 durchstochen wird. Auf diese Weise wird eine Rückkontamination in Richtung der Getränkezubereitungsmaschine wirksam vermieden, weil die Fluidzuführung 12 und die Kartuschenentladeeinrichtung insbesondere sofort beim Einsetzen des Kartuschensystems 1 unter Überdruck stehen und somit verhindert wird, dass Getränkesubstanz 7 in Richtung der Fluidquelle bzw. Druckluftquelle wandert. Die Getränkesubstanz 7 kann sich ausgehend vom Reservoir 6 somit lediglich in Richtung der Mischkammer 8 bewegen (siehe Figur 9c), sobald das Dichtelement 18 geöffnet wird.

Die Kartuschenaufnahme 10 umfasst eine Grundstruktur 10' mit einer napfförmigen Ausgestaltung. Die offene Seite dieser napfförmigen Ausgestaltung zeigt in Richtung Kartusche 2 und nimmt zumindest teilweise die Kartusche 2, insbesondere den Rand 2ʺʺ der Kartuschenwandung 2" mit dem Flansch 4 und den Verbindungsmitteln 20 auf. Auf einer gegenüberliegenden Bodenseite 10" weist die Grundstruktur 10' die Getränkeauslassöffnung 11 und die nach außen offene Dornführung 80 auf. An einer Seitenwandung 10‴ der Grundstruktur 10' ist die Fluidzuführung 12 ausgebildet. Die Grundstruktur 10' ist insbesondere als Kunststoffteil und besonders bevorzugt als Kunststoff-Spritzgussteil ausgebildet.

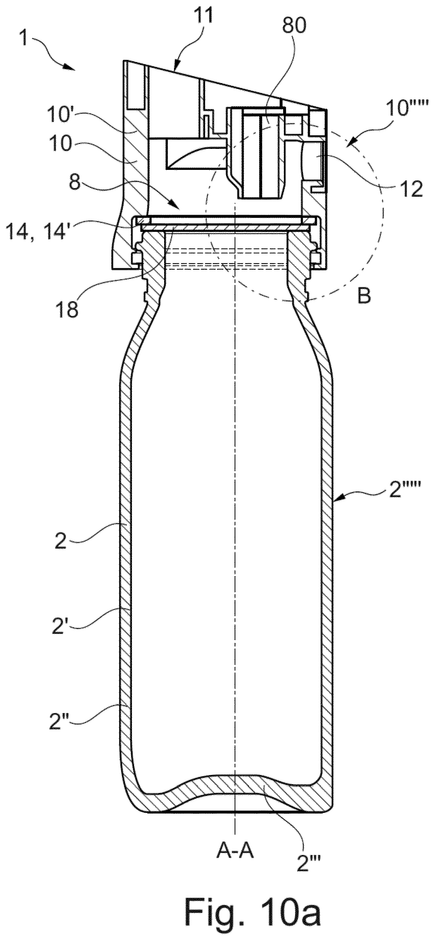

In **Figur 10a** ist eine schematische Schnittansicht eines Kartuschensystems 1 gemäß einer beispielhaften Ausführungsform der vorliegenden Erfindung gezeigt. Das Kartuschensystem 1 umfasst die Kartusche 2 und die Kartuschenaufnahme 10, die als Mischkappe mit einer Mischkammer 8 ausgebildet ist. Es ist möglich, dass die Kartusche 2, wie dargestellt, an einer Seite an ihrem Umfang eine Abflachung 2‴ʺ aufweist und dass die Kartuschenaufnahme 10 ebenfalls an einer Seite eine Abflachung 10‴ʺ aufweist. Mithilfe der Abflachungen 2‴ʺ, 10‴ʺ ist insbesondere eine vorteilhafterweise festlegbare Orientierung der Kartusche 2 und der Kartuschenaufnahme 10 in der Getränkezubereitungsmaschine möglich. Derart und/oder mithilfe weiterer Mittel kann eine Verdrehsicherung zwischen der Kartusche 2 und der Kartuschenaufnahme 10 ausgebildet sein. Die Kartusche 2 umfasst keinen Flansch 4. Das Dichtelement 18 ist an der Kartuschenwandung 2' der Kartusche 2, insbesondere an einer Stirnfläche der Kartuschenwandung 2', befestigt, beispielsweise geklebt, gesiegelt, geschweißt und/oder gecrimpt. Das Dichtelement 18 kann dabei eine Dichtfolie und/oder einen halbstarren oder starren Dichtkörper, beispielsweise eine Crimpkappe, umfassen. Das Dichtelement 18 dichtet im Ausgangszustand des Kartuschensystems 1 das Reservoir 6 der Kartusche 2 ab. An der Kartuschenwandung 2' ist ferner ein Verbindungsmittel 20 zur Verbindung der Kartusche 2 und der Kartuschenaufnahme 10 ausgebildet. Das Verbindungsmittel 20 ist in der dargestellten Ausführungsform als Außengewinde ausgebildet. Die Kartuschenaufnahme 10 umfasst ein zu dem Außengewinde der Kartusche 2 komplementäres Gegenverbindungsmittel 21, das als Innengewinde ausgebildet ist. Die Kartuschenaufnahme 10 ist durch das Innengewinde und das Außengewinde auf die Kartusche 2 aufgeschraubt, insbesondere mit einer Rückdrehsicherung, um ein ungewolltes Abschrauben der Kartuschenaufnahme 10 von der Kartusche 2 zu verhindern und/oder eine festlegbare Orientierung zwischen der Kartusche 2 und der Kartuschenaufnahme 10 zu erreichen. In vorteilhafter Weise ist eine zusätzliche Abdichtung zwischen der Kartusche 2 und der Kartuschenaufnahme 10 mithilfe eines Abdichtungsmittels 14 ausgebildet. Durch das Abdichtungsmittel 14 wird die Verbindung zwischen der Kartusche 2 und der Kartuschenaufnahme 10 besonders vorteilhaft abgedichtet, sodass bei der Zubereitung eines Getränks keine Flüssigkeiten am Übergang zwischen der Kartusche 2 und der Kartuschenaufnahme 10 austreten. Das Abdichtungsmittel 14 dient vorteilhaft auch zum Ausgleich von Toleranzen. Dieser Toleranzausgleich ist von besonderem Vorteil bei der Verwendung einer Glaskartusche 2.

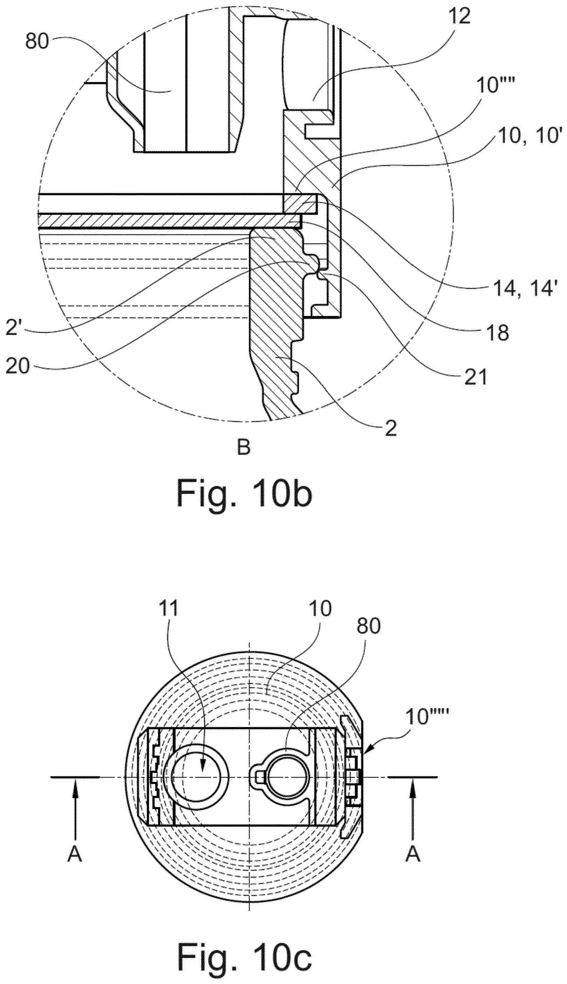

In **Figur 10b** ist eine vergrößerte Darstellung des in der Figur 10a mit dem Buchstaben "B" markierten Bereichs der Kartuschenaufnahme 10 und der Kartusche 2 gezeigt. Das Abdichtungsmittel 14 ist zwischen der Kartusche 2 und der Kartuschenaufnahme 10 angeordnet. Insbesondere ist das Abdichtungsmittel 14 teilweise oder vollständig zwischen einem nach innen über die Stirnfläche bzw. Oberseite der Kartuschenwandung 2' ausgebildeten Vorsprungbereich 10ʺʺ der Kartuschenaufnahme 10 und dem Dichtelement 18 angeordnet. Das Abdichtungsmittel 14 ist in der dargestellten Ausführungsform als Dichtring 14', insbesondere als O-Ring, ausgebildet. Der Dichtring 14' liegt somit auf dem Dichtelement 18 und/oder der Oberseite bzw. Stirnfläche der Kartuschenwandung 2' auf. Alternativ zur Verwendung eines O-Rings wäre auch eine vollflächige Ausbildung des Abdichtungsmittels 14 mit einer Bohrung/Aussparung für den Aufstechdorn 73 denkbar. Alternativ wäre auch eine vollflächige Ausbildung des Abdichtungsmittels 14 ohne eine Bohrung/Aussparung für den Aufstechdorn 73 denkbar. Es sind alternativ oder zusätzlich zum Dichtring 14' auch andere Abdichtungsmittel 14 zur Abdichtung der Mischkammer 8, also insbesondere des Übergangs der Kartusche 2 zur Kartuschenaufnahme 10, denkbar. Beispielsweise ist es möglich, dass das Dichtelement 18 an seiner von der Kartusche 2 abgewandten Oberseite (also der zur der Kartuschenaufnahme 10, insbesondere zu dem Vorsprungbereich 10"", hingewandten Seite) einen geschäumten Bereich bzw. einen Schaum aufweist, der für die zusätzliche Abdichtung sorgt.

In **Figur 10c** ist eine schematische Aufsichtsdarstellung auf die Kartuschenaufnahme 10 gemäß der in den Figuren 10a und 10b dargestellten Ausführungsform gezeigt.

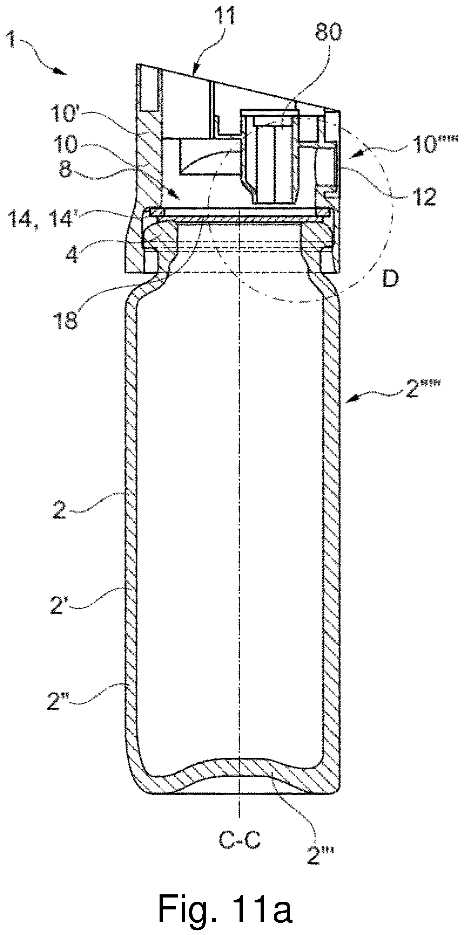

In **Figur 11a** ist eine schematische Schnittansicht eines Kartuschensystems 1 gemäß einer beispielhaften Ausführungsform der vorliegenden Erfindung gezeigt. Das Kartuschensystem 1 umfasst die Kartusche 2 und die Kartuschenaufnahme 10, die als Mischkappe mit einer Mischkammer 8 ausgebildet ist. Es ist möglich, dass die Kartusche 2, wie dargestellt, an einer Seite an ihrem Umfang eine Abflachung 2‴ʺ aufweist und dass die Kartuschenaufnahme 10 ebenfalls an einer Seite eine Abflachung 10‴ʺ aufweist. Mithilfe der Abflachungen 2‴ʺ, 10‴ʺ ist insbesondere eine vorteilhafterweise festlegbare Orientierung der Kartusche 2 und der Kartuschenaufnahme 10 in der Getränkezubereitungsmaschine möglich. Derart und/oder mithilfe weiterer Mittel kann eine Verdrehsicherung zwischen der Kartusche 2 und der Kartuschenaufnahme 10 ausgebildet sein. Die Kartusche 2 umfasst einen Flansch 4. An dem Flansch 4 ist das Dichtelement 18 befestigt, beispielsweise geklebt, gesiegelt, geschweißt und/oder gecrimpt. Das Dichtelement kann dabei eine Dichtfolie und/oder einen halbstarren oder starren Dichtkörper, beispielsweise eine Crimpkappe, umfassen. Das Dichtelement 18 ist insbesondere mithilfe des Flansches 4, bevorzugt mithilfe der Stirnseite des Flansches 4, dicht an der Kartusche 2 befestigt. Bei der in Figur 11a gezeigten Ausführungsform ist der Flansch 4 gleichzeitig als Verbindungsmittel 20 zur Verbindung der Kartusche 2 und der Kartuschenaufnahme 10 ausgebildet. In diesem Fall ist das Verbindungsmittel 20 der Kartusche 2 also insbesondere kein von dem Flansch 4 separates Element. Die Kartuschenaufnahme 10 ist auf die Kartusche 2, insbesondere mithilfe des Flansches 4, geprellt und/oder aufgerastet. Es ist möglich, dass die Kartuschenaufnahme 10 hierfür ein zum Flansch 4 komplementäres Gegenverbindungsmittel 21 aufweist. Vorzugsweise ist eine zusätzliche Abdichtung zwischen der Kartusche 2 und der Kartuschenaufnahme 10 mithilfe eines Abdichtungsmittels 14 ausgebildet. Durch das Abdichtungsmittel 14 wird die Verbindung zwischen der Kartusche 2 und der Kartuschenaufnahme 10 besonders vorteilhaft abgedichtet, sodass bei der Zubereitung eines Getränks keine Flüssigkeiten am Übergang zwischen der Kartusche 2 und der Kartuschenaufnahme 10 austreten. Das Abdichtungsmittel 14 dient vorteilhaft auch zum Ausgleich von Toleranzen. Dieser Toleranzausgleich ist von besonderem Vorteil bei der Verwendung einer Glaskartusche 2.

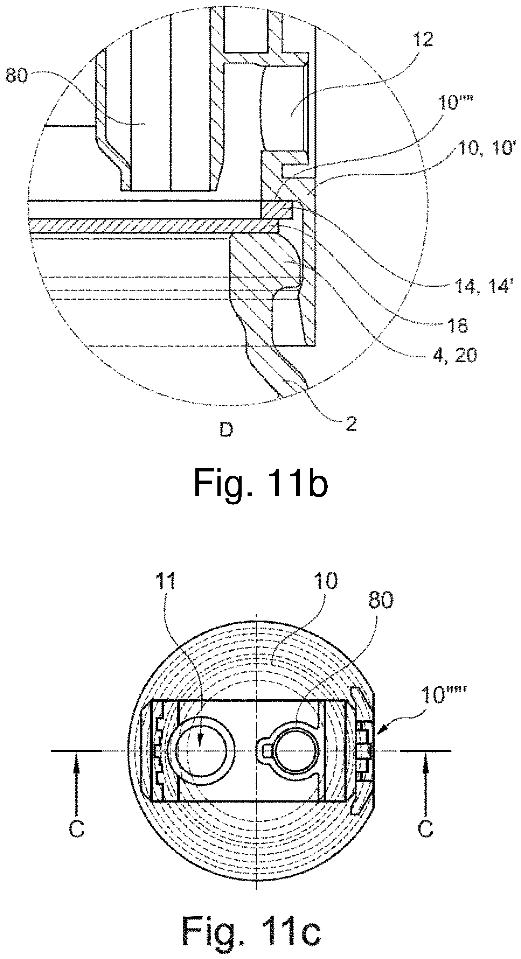

In **Figur 11b** ist eine vergrößerte Darstellung des in der Figur 11a mit dem Buchstaben "D" markierten Bereichs der Kartuschenaufnahme 10 und der Kartusche 2 gezeigt. Das Abdichtungsmittel 14 ist zwischen der Kartusche 2 und der Kartuschenaufnahme 10 angeordnet. Insbesondere ist das Abdichtungsmittel 14 teilweise oder vollständig zwischen einem nach innen über die Stirnfläche 4" bzw. Oberseite 4' des Flansches 4 ausgebildeten Vorsprungbereich 10ʺʺ der Kartuschenaufnahme 10 und dem Dichtelement 18 angeordnet. Das Abdichtungsmittel 14 ist in der dargestellten Ausführungsform als Dichtring 14', insbesondere als O-Ring, ausgebildet. Der Dichtring 14' liegt oberhalb des Flansches 4 somit auf dem Dichtelement 18 und/oder der Oberseite 4' des Flansches 4 auf. Alternativ zur Verwendung eines O-Rings wäre auch eine vollflächige Ausbildung des Abdichtungsmittels 14 mit einer Bohrung/Aussparung für den Aufstechdorn 73 denkbar. Alternativ wäre auch eine vollflächige Ausbildung des Abdichtungsmittels 14 ohne eine Bohrung/Aussparung für den Aufstechdorn 73 denkbar. Es sind alternativ oder zusätzlich zum Dichtring 14' auch andere Abdichtungsmittel 14 zur Abdichtung der Mischkammer 8, also insbesondere des Übergangs der Kartusche 2 zur Kartuschenaufnahme 10, denkbar. Beispielsweise ist es möglich, dass das Dichtelement 18 an seiner von der Kartusche 2 abgewandten Oberseite (also der zur der Kartuschenaufnahme 10, insbesondere zu dem Vorsprungbereich 10"", hingewandten Seite) einen geschäumten Bereich bzw. einen Schaum aufweist, der für die zusätzliche Abdichtung sorgt.

In **Figur 11c** ist eine schematische Aufsichtsdarstellung auf die Kartuschenaufnahme 10 gemäß der in den Figuren 11a und 11b dargestellten Ausführungsform gezeigt.

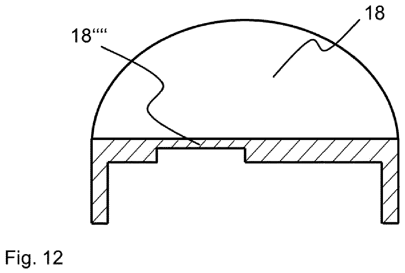

In **Figur 12** ist eine schematische perspektivische Schnittansicht eines Dichtelements 18 gemäß einer beispielhaften Ausführungsform der vorliegenden Erfindung gezeigt. Das Dichtelement 18 ist als Kunststoffkappe ausgebildet und weist einen oder mehrere Kunststoffe auf. Die Kunststoffkappe kann beispielsweise mithilfe von Spritzgießen ausgebildet werden. Es ist dabei denkbar, dass die Kunststoffkappe als Crimpkappe, Rastkappe oder Schraubkappe ausgebildet ist, also beispielswiese auf eine Kartusche gecrimpt, gerastet oder geschraubt werden kann. Das Dichtelement 18, insbesondere die Kunststoffkappe, weist eine Schwächung 18ʺʺ zur Durchführung des Aufstechdorns 73 auf. Die Schwächung 18ʺʺ ist insbesondere ein Bereich der Kunststoffkappe, der im Vergleich zu den angrenzenden Bereichen der Kunststoffkappe eine verringerte Dicke aufweist. Die Schwächung 18ʺʺ wird vorzugsweise bei der Ausbildung der Kunststoffkappe, beispielsweise beim Spritzgießen, als verdünnter Bereich der Kunststoffkappe erzeugt, sodass keine weitere Nachbehandlung der Kunststoffkappe zur Erzeugung der Schwächung nötig ist. Die in Figur 12 gezeigte Kunststoffkappe kann als Dichtelement 18 beispielsweise mit den vorhergehend beschriebenen unterschiedlichen Ausführungsformen von Abdichtungsmitteln 14 kombiniert werden, beispielsweise mit einem ringförmigen oder vollflächigen Abdichtungsmittel 14, welches als separates Einlegeteil oder mithilfe eines Zweikomponenten-Spritzgießens als Teil des Dichtelements 18 oder als Teil der Kartuschenaufnahme 10 ausgebildet ist.

### Bezugszeichenliste

- 1: Kartuschensystem
- 2: Kartusche
- 2': Hauptkörper
- 2": Kartuschenwandung
- 2‴: Kartuschenboden
- 2ʺʺ: Rand der Kartuschenwandung
- 2‴ʺ: Abflachung der Kartusche4 Flansch
- 4': Oberseite des Flansches
- 4": Stirnfläche des Flansches
- 4‴: Höhe des Flansches
- 4ʺʺ: Außenseite des Flansches
- 4‴ʺ: Unterseite des Flansches
- 5: Nebenbereich
- 6: Reservoir
- 7: Getränkesubstanz
- 8: Mischkammer
- 9: Einbuchtung
- 10: Kartuschenaufnahme
- 10': Grundstruktur
- 10": Bodenseite
- 10‴: Seitenwandung der Grundstruktur
- 10ʺʺ: Vorsprungbereich
- 10‴ʺ: Abflachung der Kartuschenaufnahme
- 11: Getränkeauslauf
- 12: Fluidzuführung
- 14: Abdichtungsmittel
- 14': Dichtring
- 18: Dichtelement
- 18': Vorstanzung des Dichtelements
- 18": Dichtfolie
- 18‴: Durchgangsöffnung des Dichtelements
- 18ʺʺ: Schwächung des Dichtelements20 Verbindungsmittel
- 20': Rastwulst
- 20": weiterer Rastwulst
- 20‴: Abstand des Verbindungsmittels
- 21: Gegenverbindungsmittel
- 40: Druckluftleitung
- 42: Druckluftanschluss
- 43: Druckluftauslass
- 71: Seitenkanal
- 70: Getränk
- 73: Aufstechdorn
- 80: Dornführung
- 90: Öffnung
- 90': Durchmesser der Öffnung
- 91: Außendurchmesser des Flansches
- 100: zentrale Erstreckungsachse
- 110: Radialachse
- 180: Crimpkappe
- K: unterer Öffnungswinkel des Flansches
- L: oberer Öffnungswinkel des Flansches
- M: erster Krümmungsradius
- N: zweiter Krümmungsradius
- O: dritter Krümmungsradius
- P: vierter Krümmungsradius

## Patentansprüche

1. Kartuschensystem (1) zur Herstellung eines Getränks (70), wobei das Kartuschensystem (1) in eine Getränkezubereitungsmaschine einsetzbar ist, eine Kartusche (2), die ein mit einer Getränkesubstanz (7) gefülltes Reservoir (6) umfasst, und eine mit der Kartusche (2) verbundene Kartuschenaufnahme (10) aufweist, wobei die Kartuschenaufnahme (10) eine mit dem Reservoir (6) in Fluidverbindung bringbare Mischkammer (8) und eine in die Mischkammer (8) mündende Fluidzuführung (12) aufweist, wobei die Kartusche (2) eine Kartuschenwandung (2") aufweist, wobei das Kartuschensystem (1) ein Dichtelement (18) zum Verschließen des Reservoirs (6) aufweist, wobei mithilfe eines Abdichtungsmittels (14) eine Abdichtung zwischen der Kartusche (2) und der Kartuschenaufnahme (10) ausgebildet ist, **dadurch gekennzeichnet, dass** das Dichtelement (18) mithilfe oder durch eine Schraubkappe ausgebildet ist, wobei die Schraubkappe eine Dichtung und eine Bohrung aufweist, wobei ein Mündungsbereich der Kartusche (2) zum Aufschrauben der Schraubkappe ein Gewinde aufweist, wobei die Schraubkappe auf die Kartusche (2) aufgeschraubt ist, wobei die Kartuschenaufnahme (10) nach dem Aufschrauben der Schraubkappe an der Kartusche (2) und/oder der Schraubkappe befestigt ist.

2. Kartuschensystem (1) nach Anspruch 1, wobei das Abdichtungsmittel (14) als Teil des Dichtelements (18) ausgebildet ist, und/oder
wobei das Abdichtungsmittel (14) ein von dem Dichtelement (18) separates Element ist, das insbesondere zwischen der Kartusche (2) und der Kartuschenaufnahme (10) angeordnet ist.

3. Kartuschensystem (1) nach einem der vorhergehenden Ansprüche, wobei das Dichtelement (18) an der Kartuschenwandung (2") anbringbar ist, wobei die Kartuschenwandung (2") insbesondere keinen Flansch (4) zur Anbringung des Dichtelements (18) umfasst.

4. Kartuschensystem (1) nach einem der Ansprüche 1 oder 2 wobei die Kartuschenwandung (2") einen Flansch (4) zur Anbringung des Dichtelements (18) umfasst.

5. Kartuschensystem (1) nach einem der vorhergehenden Ansprüche, wobei die Kartusche einen insbesondere napfförmig ausgebildeten Hauptkörper (2') umfasst, wobei der Hauptkörper (2') mithilfe der Kartuschenwandung (2"), die auf einer Seite durch einen Kartuschenboden (2‴) verschlossen ist, ausgebildet ist, wobei der Hauptkörper (2') insbesondere das Reservoir (6) umfasst.

6. Kartuschensystem (1) nach einem der vorhergehenden Ansprüche, wobei die Kartuschenwandung (2") ein insbesondere umlaufendes Verbindungsmittel (20) zur Verbindung der Kartusche (2) mit der Kartuschenaufnahme (10) aufweist, wobei das Verbindungsmittel (20) insbesondere eine oder mehrere Rastsicken, und/oder einen oder mehrere Rastwulste, und/oder einen oder mehrere Hinterschnitte, und/oder ein Außengewinde, umfasst.

7. Kartuschensystem (1) nach einem der vorhergehenden Ansprüche, wobei die Kartusche (2) das Dichtelement (18) aufweist, wobei insbesondere der Hauptkörper (2') in einem Ausgangszustand des Kartuschensystems (1) auf seiner dem Kartuschenboden (2"') gegenüberliegenden Seite von dem Dichtelement (18) verschlossen ist.

8. Kartuschensystem (1) nach einem der vorhergehenden Ansprüche, wobei das Dichtelement eine Dichtfolie (18"), insbesondere eine Kunststofffolie, eine Aluminiumfolie oder eine Mehrschichtfolie aus Kunststoff und/oder Aluminium, umfasst.

9. Kartuschensystem (1) nach einem der Ansprüche 8, wobei die Dichtfolie (18") an dem Flansch (4) der Kartusche (2) befestigt ist, in einem Ausgangszustand des Kartuschensystems (1), wobei die Dichtfolie (18") an dem Flansch (4) der Kartusche (2) vorzugsweise geklebt, gesiegelt und/oder geschweißt ist.

10. Kartuschensystem (1) nach einem der vorhergehenden Ansprüche, wobei die Kartuschenaufnahme (10) eine Grundstruktur (10') aufweist, welche zumindest teilweise und insbesondere vollständig aus Kunststoff gefertigt ist, wobei die Grundstruktur (10') eine napfförmige Ausgestaltung aufweist, deren offene Seite in Richtung der Kartusche (2) ausgerichtet ist, wobei an einer der Kartusche (2) gegenüberliegenden Bodenseite (10") eine Getränkeauslassöffnung (11) und eine nach außen offene Dornführung (80) ausgebildet sind und wobei an der Bodenseite (10") oder einer Seitenwandung (10"') der Grundstruktur (10') eine Fluidzuführung (12) ausgebildet ist.

11. Kartuschensystem (1) nach Anspruch 10, wobei innerhalb der Dornführung (80) ein verschiebbar gelagerten Aufstechdorn (73) angeordnet ist, wobei der Aufstechdorn (73) zwischen einer eingefahrenen Position, in welcher der Aufstechdorn (73) von dem Dichtelement (18) beabstandet ist, und einer ausgefahrenen Position, in welcher der Aufstechdorn (73) das Dichtelement (18) durchsticht und bis in das Reservoir (6) ragt, verschiebbar ist, wobei insbesondere eine Außenwandung des Aufstechdorns (73) wenigstens einen Seitenkanal (71) zum Leiten der Getränkesubstanz (7) in Richtung der Mischkammer (8), wenn das Dichtelement (18) durchstochen ist, aufweist.

12. Kartuschensystem (1) nach Anspruch 11, wobei der Aufstechdorn (73) eine integrierte Druckluftleitung (40) aufweist, wobei sich die Druckluftleitung (40) im Inneren des Aufstechdorns (73) von einem äußeren Druckluftanschluss (42) zum Anschluss an eine Druckluftquelle bis zu einem Druckluftauslass (43) im Bereich einer Spitze des Aufsteckdorns erstreckt und zum Einblasen von Druckluft in das Reservoir (6) ausgebildet ist.

13. Getränkezubereitungsmaschine, umfassend ein Kartuschensystem (1) nach einem der vorhergehenden Ansprüche.

14. Verfahren zur Herstellung eines Kartuschensystems (1) nach einem der Ansprüche 1 bis 12, wobei in einem ersten Verfahrensschritt die Kartuschenwandung (2") der Kartusche (2) ausgebildet wird, wobei in einem zweiten Verfahrensschritt ein Dichtelement (18) an der Kartusche (2) befestigt wird, wobei das Dichtelement (18) mithilfe oder durch eine Schraubkappe ausgebildet ist, wobei ein Mündungsbereich der Kartusche (2) zum Aufschrauben der Schraubkappe ein Gewinde aufweist, wobei die Schraubkappe auf die Kartusche (2) aufgeschraubt wird, wobei in einem dritten Verfahrensschritt die Kartusche mit der Kartuschenaufnahme (10) verbunden wird,
wobei die Kartuschenaufnahme (10) nach dem Aufschrauben der Schraubkappe an der Kartusche (2) und/oder der Schraubkappe befestigt wird, wobei vor, während und/oder nach dem dritten Verfahrensschritt mithilfe eines Abdichtungsmittels (14) eine Abdichtung zwischen der Kartusche (2) und der Kartuschenaufnahme (10) ausgebildet wird.

15. Verfahren nach Anspruch 14, wobei das Abdichtungsmittel (14) vor dem dritten Verfahrensschritt und/oder während des dritten Verfahrensschritts, insbesondere vor, während und/oder nach dem zweiten Verfahrensschritt, an einer von der Kartusche (2) abgewandten Oberseite des Dichtelements (18) ausgebildet und/oder angeordnet wird.

## Claims

1. Cartridge system (1) for producing a beverage (70), wherein the cartridge system (1) is insertable into a beverage preparation machine, has a cartridge (2) which comprises a reservoir (6) filled with a beverage substance (7), and has a cartridge receptacle (10) connected to the cartridge (2), wherein the cartridge receptacle (10) has a mixing chamber (8) which is able to be fluidically connected to the reservoir (6), and a fluid feed (12) opening into the mixing chamber (8), wherein the cartridge (2) has a cartridge wall (2"), wherein the cartridge system (1) has a sealing element (18) for closing the reservoir (6), wherein a seal is formed between the cartridge (2) and the cartridge receptacle (10) with the aid of a sealing means (14), **characterized in that** the sealing element (18) is formed with the aid of or by a screw cap, wherein the screw cap has a seal and a bore, wherein a mouth region of the cartridge (2) has a thread for screwing on the screw cap, wherein the screw cap is screwed onto the cartridge (2), wherein the cartridge receptacle (10) is fastened to the cartridge (2) and/or the screw cap after the screw cap has been screwed on.

2. Cartridge system (1) according to Claim 1, wherein the sealing means (14) is formed as part of the sealing element (18), and/or
wherein the sealing means (14) is an element which is separate from the sealing element (18) and which is disposed in particular between the cartridge (2) and the cartridge receptacle (10).

3. Cartridge system (1) according to one of the preceding claims, wherein the sealing element (18) is able to be attached to the cartridge wall (2"), wherein the cartridge wall (2") comprises, in particular, no flange (4) for attaching the sealing element (18).

4. Cartridge system (1) according to either of Claims 1 and 2, wherein the cartridge wall (2") comprises a flange (4) for attaching the sealing element (18).

5. Cartridge system (1) according to one of the preceding claims, wherein the cartridge comprises a main body (2'), in particular of cup-shaped design, wherein the main body (2') is formed with the aid of the cartridge wall (2") which is closed on one side by a cartridge base (2**‴**), wherein the main body (2') comprises, in particular, the reservoir (6).

6. Cartridge system (1) according to one of the preceding claims, wherein the cartridge wall (2") has an in particular encircling connection means (20) for connecting the cartridge (2) to the cartridge receptacle (10), wherein the connection means (20) comprises, in particular, one or a plurality of latching grooves, and/or one or a plurality of latching beads, and/or one or a plurality of undercuts, and/or an external thread.

7. Cartridge system (1) according to one of the preceding claims, wherein the cartridge (2) has the sealing element (18), wherein, in particular, in an initial state of the cartridge system (1), the main body (2') on its side lying opposite the cartridge base (2‴) is closed by the sealing element (18).

8. Cartridge system (1) according to one of the preceding claims, wherein the sealing element comprises a sealing film (18"), in particular a plastic film, an aluminium foil, or a multilayer film of plastic and/or aluminium.

9. Cartridge system (1) according to Claim 8, wherein the sealing film (18") is fastened to the flange (4) of the cartridge (2) in an initial state of the cartridge system (1), wherein the sealing film (18") is preferably adhesively bonded, sealed and/or welded to the flange (4) of the cartridge (2).

10. Cartridge system (1) according to one of the preceding claims, wherein the cartridge receptacle (10) has a basic structure (10') which is at least partially, and in particular completely, made of plastics material, wherein the basic structure (10') has a cup-shaped design embodiment, the open side of the latter being aligned in the direction of the cartridge (2), wherein formed on a base side (10") lying opposite the cartridge (2) is a beverage outlet opening (11) and a spike guide (80) which is open towards the outside, and wherein formed on the base side (10") or a lateral wall (10‴) of the basic structure (10') is a fluid feed (12).

11. Cartridge system (1) according to Claim 10, wherein a displaceably mounted piercing spike (73) is disposed within the spike guide (80), wherein the piercing spike (73) is movable between a retracted position in which the piercing spike (73) is spaced apart from the sealing element (18), and a deployed position in which the piercing spike (73) pierces the sealing element (18) and protrudes into the reservoir (6), wherein in particular an external wall of the piercing spike (73) has at least one side channel (71) for directing the beverage substance (7) in the direction of the mixing chamber (8) when the sealing element (18) is pierced.

12. Cartridge system (1) according to Claim 11, wherein the piercing spike (73) has an integrated compressed-air line (40), wherein the compressed-air line (40) extends in the interior of the piercing spike (73) from an outer compressed-air connection (42) for connecting to a compressed-air source to a compressed-air outlet (43) in the region of a tip of the piercing spike and is designed for blowing compressed air into the reservoir (6).

13. Beverage preparation machine, comprising a cartridge system (1) according to one of the preceding claims.

14. Method for producing a cartridge system (1) according to one of Claims 1 to 12, wherein, in a first method step, the cartridge wall (2") of the cartridge (2) is formed, wherein, in a second method step, a sealing element (18) is fastened to the cartridge (2), wherein the sealing element (18) is formed with the aid of or by a screw cap, wherein a mouth region of the cartridge (2) has a thread for screwing on the screw cap, wherein the screw cap is screwed onto the cartridge (2), wherein, in a third method step, the cartridge is connected to the cartridge receptacle (10),
wherein the cartridge receptacle (10) is fastened to the cartridge (2) and/or the screw cap after the screw cap has been screwed on, wherein a seal between the cartridge (2) and the cartridge receptacle (10) is formed before, during and/or after the third method step with the aid of a sealing means (14).

15. Method according to Claim 14, wherein the sealing means (14) is formed and/or disposed on an upper side of the sealing element (18) facing away from the cartridge (2) before the third method step and/or during the third method step, in particular before, during and/or after the second method step.

## Revendications

1. Système de cartouche (1) pour la production d'une boisson (70), le système de cartouche (1) pouvant être inséré dans une machine de préparation de boissons, présentant une cartouche (2) qui comprend un réservoir (6) rempli d'une substance de boisson (7), et un logement de cartouche (10) relié à la cartouche (2), le logement de cartouche (10) présentant une chambre de mélange (8) pouvant être mise en communication fluidique avec le réservoir (6) et une amenée de fluide (12) débouchant dans la chambre de mélange (8), la cartouche (2) présentant une paroi de cartouche (2"), le système de cartouche (1) présentant un élément d'étanchéité (18) pour fermer le réservoir (6) ; à l'aide d'un moyen d'étanchéification (14), une étanchéification étant réalisée entre la cartouche (2) et le logement de cartouche (10), **caractérisé en ce que** l'élément d'étanchéité (18) est réalisé à l'aide d'un capuchon à vis ou par un capuchon à vis, le capuchon à vis présentant un joint d'étanchéité et un alésage, une zone d'embouchure de la cartouche (2) présentant un filetage pour visser le capuchon à vis, le capuchon à vis étant vissé sur la cartouche (2), le logement de cartouche (10) étant fixé à la cartouche (2) et/ou au capuchon à vis après le vissage du capuchon à vis.

2. Système de cartouche (1) selon la revendication 1, le moyen d'étanchéification (14) étant réalisé en tant que partie de l'élément d'étanchéité (18), et/ou
le moyen d'étanchéification (14) étant un élément séparé de l'élément d'étanchéité (18), qui est notamment agencé entre la cartouche (2) et le logement de cartouche (10).

3. Système de cartouche (1) selon l'une quelconque des revendications précédentes, l'élément d'étanchéité (18) pouvant être monté sur la paroi de cartouche (2"), la paroi de cartouche (2") ne comprenant notamment pas de bride (4) pour le montage de l'élément d'étanchéité (18).

4. Système de cartouche (1) selon l'une quelconque des revendications 1 ou 2, la paroi de cartouche (2'') comprenant une bride (4) pour le montage de l'élément d'étanchéité (18).

5. Système de cartouche (1) selon l'une quelconque des revendications précédentes, la cartouche comprenant un corps principal (2') réalisé notamment en forme de godet, le corps principal (2') étant réalisé à l'aide de la paroi de cartouche (2") qui est fermée sur un côté par un fond de cartouche (2‴), le corps principal (2') comprenant notamment le réservoir (6).

6. Système de cartouche (1) selon l'une quelconque des revendications précédentes, la paroi de cartouche (2") présentant un moyen de liaison (20), notamment périphérique, pour relier la cartouche (2) au logement de cartouche (10), le moyen de liaison (20) comprenant notamment une ou plusieurs moulures d'encliquetage, et/ou un ou plusieurs bourrelets d'encliquetage, et/ou une ou plusieurs contre-dépouilles, et/ou un filetage extérieur.

7. Système de cartouche (1) selon l'une quelconque des revendications précédentes, la cartouche (2) présentant l'élément d'étanchéité (18), le corps principal (2') étant notamment fermé par l'élément d'étanchéité (18) sur son côté opposé au fond de cartouche (2‴) dans un état initial du système de cartouche (1).

8. Système de cartouche (1) selon l'une quelconque des revendications précédentes, l'élément d'étanchéité comprenant un film d'étanchéité (18"), notamment un film de matière plastique, un film d'aluminium ou un film multicouche en matière plastique et/ou en aluminium.

9. Système de cartouche (1) selon la revendication 8, le film d'étanchéité (18") étant fixé à la bride (4) de la cartouche (2), dans un état initial du système de cartouche (1) ; le film d'étanchéité (18'') étant de préférence collé, scellé et/ou soudé à la bride (4) de la cartouche (2).

10. Système de cartouche (1) selon l'une quelconque des revendications précédentes, le logement de cartouche (10) présentant une structure de base (10') qui est fabriquée au moins partiellement et notamment entièrement en matière plastique, la structure de base (10') présentant une configuration en forme de godet dont le côté ouvert est orienté en direction de la cartouche (2), une ouverture de sortie de boisson (11) et un guide de mandrin (80) ouvert vers l'extérieur étant réalisés sur un côté de fond (10'') opposé à la cartouche (2), et une amenée de fluide (12) étant réalisée sur le côté de fond (10") ou sur une paroi latérale (10‴) de la structure de base (10').

11. Système de cartouche (1) selon la revendication 10, un mandrin de perçage (73) monté coulissant étant agencé à l'intérieur du guide de mandrin (80), le mandrin de perçage (73) pouvant coulisser entre une position rétractée, dans laquelle le mandrin de perçage (73) est espacé de l'élément d'étanchéité (18), et une position déployée, dans laquelle le mandrin de perçage (73) perce l'élément d'étanchéité (18) et fait saillie jusque dans le réservoir (6), une paroi extérieure du mandrin de perçage (73) présentant notamment au moins un canal latéral (71) pour guider la substance de boisson (7) en direction de la chambre de mélange (8) lorsque l'élément d'étanchéité (18) est percé.

12. Système de cartouche (1) selon la revendication 11, le mandrin de perçage (73) présentant une conduite d'air comprimé (40) intégrée, la conduite d'air comprimé (40) s'étendant à l'intérieur du mandrin de perçage (73) depuis un raccord d'air comprimé extérieur (42) pour le raccordement à une source d'air comprimé jusqu'à une sortie d'air comprimé (43) dans la zone d'une pointe du mandrin de perçage et étant réalisée pour injecter de l'air comprimé dans le réservoir (6).

13. Machine de préparation de boissons, comprenant un système de cartouches (1) selon l'une quelconque des revendications précédentes.

14. Procédé de production d'un système de cartouche (1) selon l'une quelconque des revendications 1 à 12, la paroi de cartouche (2") de la cartouche (2) étant réalisée dans une première étape de procédé, un élément d'étanchéité (18) étant fixé à la cartouche (2) dans une deuxième étape de procédé, l'élément d'étanchéité (18) étant réalisé à l'aide d'un capuchon à vis ou par un capuchon à vis, une zone d'embouchure de la cartouche (2) présentant un filetage pour le vissage du capuchon à vis, le capuchon à vis étant vissé sur la cartouche (2), la cartouche étant reliée au logement de cartouche (10) dans une troisième étape de procédé,
le logement de cartouche (10) étant fixé à la cartouche (2) et/ou au capuchon à vis après le vissage du capuchon à vis ; avant, pendant et/ou après la troisième étape de procédé, une étanchéification étant réalisée entre la cartouche (2) et le logement de cartouche (10) à l'aide d'un moyen d'étanchéification (14).

15. Procédé selon la revendication 14, le moyen d'étanchéification (14) étant réalisé et/ou agencé sur un côté supérieur de l'élément d'étanchéité (18) détourné de la cartouche (2) avant la troisième étape de procédé et/ou pendant la troisième étape de procédé, notamment avant, pendant et/ou après la deuxième étape de procédé.
